# EUROPEAN PATENT SPECIFICATION

(11) **EP 4 045 591 B1**
(45) Date of publication and mention of the grant of the patent: **05.07.2023**
(21) Application number: 20790294.1
(22) Date of filing: 13.10.2020
(51) Int. Cl.: C08L 25/12, C08L 25/16, C08L 51/04, C08K 5/3435, B60R 19/52, B60R 1/06

(54) **WEATHERING-RESISTANT STYRENE COPOLYMER MOLDING COMPOSITIONS WITH REDUCED MOLD DEPOSIT FORMATION FOR HIGH GLOSS APPLICATIONS**
WITTERUNGSBESTÄNDIGE STYROLCOPOLYMERFORMMASSEN MIT REDUZIERTER FORMENABLAGERUNGSBILDUNG FÜR HOCHGLANZANWENDUNGEN
COMPOSITIONS DE MOULAGE DE COPOLYMÈRE DE STYRÈNE RÉSISTANT AUX INTEMPÉRIES AVEC FORMATION DE DÉPÔT DE MOULE RÉDUITE POUR DES APPLICATIONS À BRILLANCE ÉLEVÉE

(30) Priority: 15.10.2019 EP 19203354
(43) Date of publication of application: 24.08.2022
(73) Proprietor: INEOS Styrolution Group GmbH, 60325 Frankfurt (DE)
(72) Inventor: RUTHARD, Christian, 55124 Mainz (DE)
(74) Representative: Jacobi, Markus Alexander
(86) International application number: PCT/EP2020/078778
(87) International publication number: WO 2021/074151

(56) References cited:
- EP-A1- 2 723 813
- WO-A1-2012/007268
- WO-A1-2019/020686
- WO-A1-2019/020688
- GB-A- 2 267 499
- US-A1- 2015 065 622

## Description

Impact modified molding compositions, such as acrylonitrile styrene acrylate (ASA), and blends thereof with other thermoplastic polymers are widely used in many applications such as, e.g., in automotive industry, electronic industry or for household goods. The popularity of these thermoplastic polymer compositions can be attributed to their balanced properties of good impact strength, melt flow characteristics and high weathering stability.

A significant application area for ASA polymers are unpainted parts in exterior automotive applications such as front grills or side mirrors that are often colored in black. In such parts, automotive producers require next to primary material properties such as impact and thermal properties also a certain stability of surface appearance upon exposure to UV light and weathering conditions over an extended period of time (several thousand hours). Often, laboratory weathering exposure tests are used by automotive producers to simulate outdoor exposure over a period of years and thereafter surface appearance is often judged by changes of surface color or gloss level. Whereas in more traditional designs unpainted exterior automotive parts have been usually decorated with a grained and thus low gloss surface texture there is a clear design trend in recent years for automotive exterior parts with a high gloss surface finish or with a combination of high and low gloss surface areas. This leads to a growing need for thermoplastic compositions with high stability of surface appearance of high gloss surface areas. High gloss surface areas in this invention are defined as surface areas with a gloss level above 75 gloss units determined at a measuring angle of 60° according to DIN EN ISO 2813 (2015).

With the currently available state of the art technology, in ASA polymers sufficient weathering stability of high gloss surfaces unfortunately cannot be achieved. The time until visible surface appearance changes appear is significantly shorter upon weathering of high gloss surfaces compared to grained surfaces.

The production of molded parts with high gloss surface leads to additional requirements compared to low gloss parts with surface grain.

In order to produce high gloss parts with high surface quality, deposit formation on the mold surface needs to be reduced to a minimum as the sensitivity of defects is significantly larger for high gloss compared to low gloss parts. It is the task of this invention to provide a novel ASA formulation with both acceptable low mold deposit formation in the production of high gloss parts and also with improved weathering resistance of high gloss parts compared to the state of the art.

Often, UV stabilizers such as hindered amine light stabilizer (HALS) compounds or UV absorbers are used in ASA formulations for use in exterior applications. Several documents such as US 4,692,486, US 9,701,813, EP-B 2593510 and DE-A 10316198 teach HALS stabilizers and combinations thereof as UV absorbers and light stabilizers. However, within our investigations we have found that ASA compositions using already described UV stabilizer formulations cannot meet the required combination of low mold deposit formation and high weathering resistance needed for high gloss exterior applications.

It has been surprisingly found that specific hindered amine light stabilizers (HALS) with high molecular weight (at least above 1000 g/mol) at relatively high concentrations (above 0.5 wt.-% of the molding composition) in combination with reduced levels (below 0.4 wt.-% of the molding composition) of lower molecular weight (below 550 g/mol) HALS stabilizers and HALS stabilizers with saturated or unsaturated C12-C21 ester moieties (i.e. saturated or unsaturated esters having 12 to 21 carbon atoms) at at least one of the 3, 4 or 5 positions of the piperidine structure are very efficient in stabilizing high gloss ASA surface appearances in long term exterior weathering and such formulation at the same time lead to a desired acceptable low mold deposit formation.

Accordingly, a first aspect of the present invention relates to a molding composition (P) comprising:
(A) 81.7 to 99.4 wt.-%, based on the total weight of the molding composition (P), of at least one thermoplastic polymer composition (A) comprising:
   (A-1) at least one graft copolymer (A-1), wherein the graft copolymer (A-1) is a rubber-modified copolymer comprising repeating units of acrylonitrile and styrene, and
   (A-2) at least one thermoplastic matrix (A-2) based on one or more vinylaromatic copolymers;
(B) at least one hindered amine light stabilizing composition (B) comprising:
   (B-1) 0.1 to 0.9 wt.-%, preferably 0.15 to 0.6 wt.-%, more preferably 0.2 to 0.4 wt.-%, based on the total weight of the molding composition (P), of a hindered amine light stabilizer mixture having a monopiperidine structure with at least one alkyl group at each of the 2 and 6 positions of the monopiperidine structure and saturated or unsaturated C12-C21 ester moieties (i.e. saturated or unsaturated esters having 12 to 21 carbon atoms) at at least one of the 3, 4 or 5 positions of the monopiperidine structures,
   (B-2) 0 to 0.4 wt.-%, preferably 0.1 to 0.4 wt.-%, more preferably 0.1 to 0.35 wt.-%, based on the total weight of the molding composition (P), of at least one hindered amine light stabilizer having a dipiperidine structure with at least one alkyl group at each of the 2 and 6 positions of the dipiperidine structure and not containing any saturated or unsaturated C12-C21 ester moieties at one of the 3, 4 or 5 positions of the piperidine structures, wherein the at least one hindered amine light stabilizer having a dipiperidine structure has a molecular weight of 200-550 g/mol, and
   (B-3) 0.5 to 2 wt.-%, preferably 0.51 to 1.8 wt.-%, more preferably 0.55 to 1.5 wt.-%, based on the total weight of the molding composition (P), of at least one hindered amine light stabilizer having a polymeric structure comprising piperidine groups with at least one alkyl group at each of the 2 and 6 positions of the piperidine groups and not containing any saturated or unsaturated C12-C21 ester moieties at one of the 3, 4 or 5 positions of the piperidine groups, wherein the at least one hindered amine light stabilizer having a polymeric structure has a molecular weight of 1000-4000 g/mol, preferably of 1500-4000 g/mol, more preferably 2000-4000 g/mol;
(C) 0 to 10 wt.-%, preferably 0.1 to 10 wt.-%, based on the total weight of the molding composition (P), of one or more colorants, dyes and/or pigments (C); and
(D) 0 to 5 wt.-%, preferably 0.05 to 5 wt.-%, based on the total weight of the molding composition (P), of one or more further additives (D);
wherein the constituents (A) to (D) sum up to 100 wt.-% of the molding composition (P).

Within the present application, the carbon atoms in the piperidine moieties and the positions to which the substituents are attached, respectively, are numbered according to the following general chemical structure, wherein the nitrogen atom is numbered as position 1:

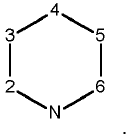

In a further preferred embodiment, the invention relates to a molding composition (P), wherein the hindered amine light stabilizing composition (B) comprises:
(B-1) 0.1 to 0.9 wt.-%, preferably 0.15 to 0.6 wt.-%, more preferably 0.2 to 0.4 wt.-%, based on the total weight of the molding composition (P), of a compound represented by the chemical formula (I): 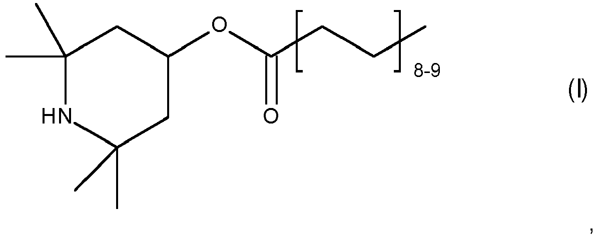
(B-2) 0 to 0.4 wt.-%, preferably 0.1 to 0.4 wt.-%, more preferably 0.1 to 0.35 wt.-%, based on the total weight of the molding composition (P), of a compound represented by the chemical formula (II): 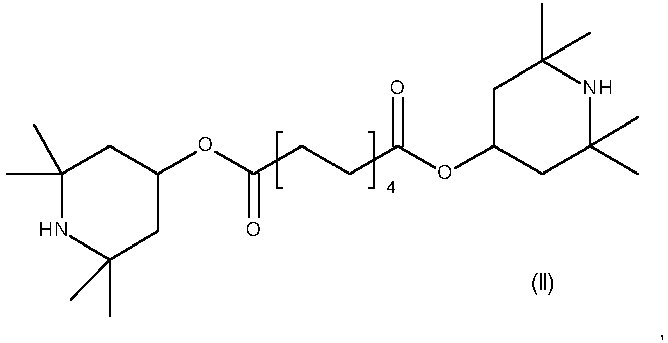 and
(B-3) 0.5 to 2 wt.-%, preferably 0.51 to 1.8 wt.-%, more preferably 0.55 to 1.5 wt.-%, based on the total weight of the molding composition (P), of a compound represented by the chemical formula (III):

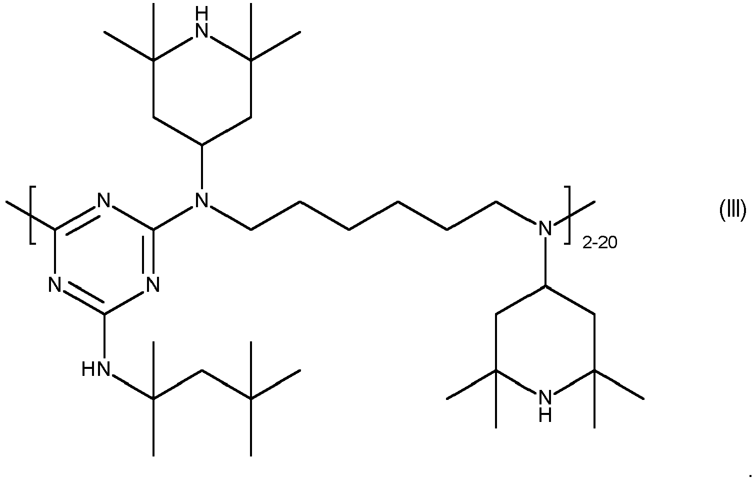

In a further embodiment, the invention relates to a molding composition (P) as previously defined, wherein the at least one graft copolymer (A-1) comprises or consists of an acrylonitrile styrene acrylate (ASA) copolymer comprising rubber particles having an average particle size d₅₀ of the rubber particles in the acrylonitrile styrene acrylate (ASA) copolymer from 50 to 1000 nm, wherein the average particle size is determined by scattered light measurement.

In a further embodiment, the invention relates to a molding composition (P) as previously defined, wherein the at least one thermoplastic matrix (A-2) comprises a copolymer which contains at least one vinyl cyanide repeating unit and at least one vinylaromatic repeating unit.

In a further embodiment, the invention relates to a molding composition (P) as previously defined, wherein the at least one thermoplastic polymer composition (A) comprises at least one copolymer (A-2) comprising:
18 to 45 wt.-% of at least one vinyl cyanide repeating unit; and
55 to 82 wt.-% of at least one vinylaromatic repeating unit.

In a further embodiment, the invention relates to a molding composition (P) as previously defined, wherein the at least one thermoplastic polymer composition (A) comprises:
(A-1) 5 to 50 wt.-%, based on the thermoplastic polymer composition (A), of at least one graft copolymer (A-1) comprising or consisting of an acrylonitrile styrene acrylate (ASA) copolymer comprising rubber particles having an average particle size d₅₀ of the rubber particles in the acrylonitrile styrene acrylate (ASA) copolymer from 50 to 1000 nm, wherein the average particle size is determined by scattered light measurement;
(A-2) 20 to 95 wt.-%, based on the thermoplastic polymer composition (A), of at least one thermoplastic matrix (A-2) comprising 18 to 45 wt.-%, based on the total weight of the thermoplastic matrix (A-2), of at least one vinyl cyanide repeating unit and 55 to 82 wt.-%, based on the total weight of the thermoplastic matrix (A-2), of at least one vinylaromatic repeating unit; and
(A-3) 0 to 75 wt.-%, based on the thermoplastic polymer composition (A), of one or more additional thermoplastic polymers (A-3),
wherein the constituents (A-1) to (A-3) sum up to 100 wt.-% of the thermoplastic polymer composition (A).

In a further embodiment, the invention relates to a molding composition (P) as previously defined, wherein the graft copolymer (A-1) comprises a binary or trinary size distribution of the rubber particles comprising:
(A-1a) at least one graft copolymer (A-1a) having an average particle size d₅₀ of the rubber particles in the ASA copolymer from 50 to 150 nm; and
(A-1b) at least one graft copolymer (A-1b) having an average particle size d₅₀ of the rubber particles in the ASA copolymer from 200 to 750 nm.

In a further embodiment, the invention relates to a molding composition (P) as previously defined, wherein a high gloss surface area on a molded article (T) produced from said molding composition (P) that exhibits a gloss level above 75 gloss units before any weathering exposure keeps a gloss level of above 70 gloss units after being subjected to artificial weathering according to ISO 4892-2A for 3200 h, wherein the gloss level is determined according to DIN EN ISO 2813 at a measuring angle of 60°.

In a further embodiment, the invention relates to a molding composition (P) as previously defined, wherein a high gloss surface area on a molded article (T) produced from said molding composition (P) that exhibits a gloss level above 75 gloss units before any weathering exposure exhibits a color shift dE as measured in reference to the unexposed surface of below dE = 6, after being subjected to artificial weathering according to ISO 4892-2A for 3200 h, wherein the gloss level is determined according to DIN EN ISO 2813 at a measuring angle of 60°.

In a further aspect, the invention relates to a method for producing the molding composition (P) previously described, the method comprising at least the following steps:
(i) providing the components (A) to (D) in the predetermined amounts to an optionally heatable mixing device; and
(ii) blending the components (A) to (D) in the optionally heatable mixing device at temperatures above the glass transition point of the components (A) to (D) to obtain the molding composition (P).

In a further aspect, the invention relates to a method for improving weathering resistance of high gloss surface molded articles (T) with gloss levels above 75 gloss units on at least a part of the surface area of the molded article (T) before being subjected to artificial weathering, wherein the gloss level is determined according to DIN EN ISO 2813 (2015) at a measuring angle of 60°, wherein said method comprises the step of compounding the constituents (A) to (D) as previously described, and wherein a high gloss surface molded article (T) obtained from the molding composition (P) exhibits the following:
a color shift of a high gloss surface molded article (T) produced from the molding composition (P) subjected to artificial weathering according to ISO 4892-2A (2013) for 3200 h of below 25 % of the color shift of a high gloss surface molded article (T) produced from a comparative molding composition (P') molded and assessed with same conditions, wherein the comparative molding composition (P') is obtained by compounding the components (A) to (D) contained in the molding composition (P) as previously described but containing less than 0.5 wt.-% of the at least one hindered amine light stabilizer (B-3), based on the total weight of the comparative molding composition (P').

In a further aspect, the invention relates to a method for reducing mold deposit formation upon the molding of high gloss surface molded articles (T) with gloss levels above 75 gloss units on at least a part of the surface area of the molded article (T), wherein the gloss level is determined according to DIN EN ISO 2813 at a measuring angle of 60°, wherein said method comprises the step of compounding the constituents (A) to (D) as previously described, and wherein the reduction of mold deposit formation is observed as followed:
Reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P") molded and assessed with same conditions,
where the comparative molding composition (P") is obtained by compounding the components (A) to (D) contained in the molding composition (P) as previously described, with the difference that more than 0.4 wt.-% of the at least one hindered amine light stabilizer (B-2), based on the total weight of the comparative molding composition (P"), are used in the comparative molding composition (P").

In a further aspect, the invention relates to a method for improving weathering resistance on high gloss surface molded articles (T) with gloss levels above 75 gloss units on at least a part of the surface area of the molded article (T) before being subjected to artificial weathering, wherein the gloss level is determined according to DIN EN ISO 2813 at a measuring angle of 60°, and also for reducing mold deposit formation upon the molding of such high gloss surface molded articles (T),
wherein said method comprises the step of compounding the constituents (A) to (D) as previously described, and wherein a high gloss surface molded article (T) obtained from the molding composition (P) exhibits the following:
a color shift of a high gloss surface molded article (T) produced from the molding composition (P) subjected to artificial weathering according to ISO 4892-2A for 3200 h of below 25 % of the color shift of a high gloss surface molded article (T) produced from a comparative molding composition (P‴) molded and assessed with same conditions, and also a reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P‴) molded and assessed with same conditions,
wherein the comparative molding composition (P‴) is obtained by compounding the components (A) to (D) contained in the molding composition (P) as previously described but containing less than 0.5 wt.-% of at least one hindered amine light stabilizer (B-3) and more than at least 0.4 wt.-% of the molded mass (P4) of at least one hindered amine light stabilizer (B-2), each based on the total weight of the comparative molding composition (P‴).

In a further aspect, the invention relates to a molded article (T) comprising high gloss surface areas with gloss levels above 75 gloss units prepared from a molding composition (P) as previously described, wherein the gloss level is determined according to DIN EN ISO 2813 at a measuring angle of 60°.

In a further aspect, the invention relates to the use of a molded article (T) with preferably high gloss surface areas with gloss levels above 75 gloss units prepared from a molding composition (P) as previously described, in unpainted exterior, preferably automotive applications, wherein the gloss level is determined according to DIN EN ISO 2813 at a measuring angle of 60°.

### Graft Copolymer (Component A-1)

The molding composition (P) according to the present invention comprises (or consists of) at least one thermoplastic polymer composition (A) comprising at least one graft copolymer (A-1), and at least one at least one thermoplastic matrix (A-2) based on one or more vinylaromatic copolymer(s).

The graft copolymer (A-1) is a rubber-modified copolymer comprising repeating units of acrylonitrile and styrene. In a preferred embodiment, copolymers of acrylonitrile and styrene which are graft-polymerized on rubber particles derived from polymerizing a monomer composition comprising at least one conjugated diene monomer or at least one acrylate monomer are used.

In a further preferred embodiment, the at least one graft copolymer (A-1) used comprises (or consists of):
A-1.1: from 20 to 90 wt.-%, preferably from 40 to 90 wt.-%, particularly preferably from 45 to 85 wt.-%, very particularly preferably from 50 to 80 wt.-%, based on the total weight of the graft copolymer (A-1), of a graft base of one or more monomers consisting of:
   A-1.11: 65 to 100 wt.-% or 65 to 99.99 wt.-%, preferably 75 to 99.99 wt.-%, particularly preferably 80 to 99.98 wt.-%, based on the total weight of the graft base (A-1.1), of at least one C1 to C8 alkyl(meth)acry-late, in particular n-butyl acrylate and/or 2-ethylhexyl acrylate,
   A-1.12: 0 to 35 wt.-%, preferably 0 to 25 wt.-%, particularly preferably 0 to 20 wt.-%, based on the total weight of the graft base (A-1.1), of at least one further comonomer selected from: styrene, α-methyl styrene, acrylonitrile, methacrylonitrile, methyl methacrylate, maleic acid anhydride and N-phenylmaleimide, preferably styrene and α-methyl styrene, particularly preferably styrene;
   A-1.13: from 0 to 10 wt.-% or 0.01 to 10 wt.-%, preferably from 0.01 to 5, particularly preferably from 0.02 to 2 wt.-%, based on the total weight of the graft base (A-1.1), of one or more polyfunctional crosslinking monomers, selected from allyl(meth)acrylate, divinylbenzene, diallylmaleate, diallylfumarate, diallylphthalate, triallylcyanurat, triallylisocyanurat and dihydrodicyclopentadienyl acrylate (DCPA), which, when component A-1.11 is acrylate, is present in amounts of at least 0.1 wt.-%;
A-1.2: from 10 to 80 wt.-%, preferably from 10 to 60 wt.-%, more preferably from 15 to 55 wt.-%, very particularly preferably from 20 to 50 wt.-%, based on the total weight of the graft copolymer (A-1), of at least one graft layer of one or more monomers consisting of:
   A-1.21: from 65 to 95 wt.-%, preferably from 70 to 90 wt.-%, particularly preferably from 75 to 85 wt.-%, based on the total weight of the graft layer (A-1.2), of at least one vinylaromatic monomer, preferably styrene and/or α-methyl styrene, in particular styrene;
   A-1.22: 5 to 35 wt.-%, preferably 10 to 30 wt.-%, particularly preferably 15 to 25 wt.-%, based on the total weight of the graft layer (A-1.2), of acrylonitrile and/or methacrylonitrile, preferably acrylonitrile; and
A-1.3: 0 to 30 wt.-%, preferably 0 to 20 wt.-%, particularly preferably 0 to 15 wt.-%, based on the total weight of the graft copolymer (A-1), of at least one further constituent selected from:
   at least one monoethylenically unsaturated monomer selected from: methyl methacrylate, maleic acid anhydride and N-phenylmaleimide, preferably methyl methacrylate and/or
   at least one molecular weight regulator, in particular a thiol-based molecular weight regulator such as tert-dodecylmercaptan.

Particular preferred polyfunctional crosslinking monomers A-1.13 are allyl(meth)acrylate and/or dihydrodicyclopentadienyl acrylate (DCPA), and more preferred DCPA.

Preferably, the graft copolymer (A-1) is typically prepared in an emulsion polymerization process or a suspension polymerization process. The graft base A-1.1, comprising (or consisting of) monomers A-1.11, A-1.12 and optionally A-1.13, as well as its preparation is known and described in the literature, e.g. DE-A 28 26 925, DE-A 31 49 358 and DE-A 34 14 118.

The graft polymerization reaction used to synthesize the graft shell A-1.2 may be conveniently done in the same vessel as the emulsion polymerization done for the synthesis of the graft base A-1.1. During the reaction, additives, like emulsifiers, pH buffers and initiators can be added. The monomers of the graft shell, especially monomers A-1.21 and A-1.22, can be added at once to the reaction mixture or stepwise in several steps, preferably in a continuous way, added during polymerization. When monomers A-1.21 and/or A-1.22 are added in several steps typically a multi-layered graft shell A-1.2 is obtained.

Suitable emulsifiers, buffers and initiators are e.g. described in WO 2015/150223 and WO 2015/078751.

In a preferred embodiment, the styrene-based graft copolymer (A-1) is acrylonitrile styrene acrylate (ASA) and mixtures thereof.

In a more preferred embodiment, the graft copolymer (A-1) according to the invention is particularly preferably an ASA copolymer comprising (or consisting of):
A-1.1: from 40 to 90 wt.-%, based on the total weight of the styrene-based graft copolymer (A-1), of a graft base consisting of:
   A-1.11: from 65 to 99.9 wt.-%, preferably from 90 to 99.5 wt.-%, based on the total weight of the graft base (A-1.1), of at least one C1 to C8 alkyl(meth)acrylate, preferably n-butyl acrylate and/or 2-ethylhexylacrylate, in particular n-butyl acrylate,
   A-1.12: 0 to 35 wt.-%, preferably 1 to 10 wt.-%, based on the total weight of the graft base (A-1.1), of styrene,
   A-1.13: 0.1 to 5 wt.-%, preferably 0.5 to 5 wt.-%, in particular 0.5 to 3 wt.-%, most preferred 1 to 2.5 wt.-%, based on the total weight of the graft base (A-1.1), of at least one polyfunctional cross-linking monomer, selected from allyl(meth)acrylate, divinylbenzene, diallylmaleate, diallylfumarate, diallylphthalate, triallylcyanurat, triallylisocyanurat and dihydrodicyclopentadienyl acrylate (DCPA), preferably selected from allyl(meth)acrylate and DCPA, in particular DCPA, and
A-1.2: from 10 to 60 wt.-%, based on the total weight of the styrene-based graft copolymer (A-1), of a graft comprising (or consisting of):
   A-1.21: from 65 to 95 wt.-%, based on the total weight of the graft layer (A-1.2), of styrene;
   A-1.22: 5 to 35 wt.-%, based on the total weight of the graft layer (A-1.2), of acrylonitrile and
A-1.3: 0 to 30 wt.-%, based on the total weight of the styrene-based graft copolymer (A-1), methyl methacrylate (MMA).

In a preferred embodiment, the at least one graft copolymer (A-1) is or comprises an acrylonitrile styrene acrylate (ASA) having an average particle size d₅₀ of the rubber particles in the ASA copolymer from 50 to 1000 nm, preferably from 60 to 600 nm, wherein the average particle size is determined by scattered light measurement.

Typically the mean particle diameter can be measured by scattered light measurement, i.e., determined by turbidity (Lange, Kolloid-Zeitschrift und Zeitschrift für Polymere, 1968, 223(1):24-30), or by ultracentrifugation (e.g. described in Scholtan and Lange, Kolloid-Zeitschrift und Zeitschrift für Polymere, 1972, 250(8):782-796), or using Hydrodynamic Chromatography HDC (e.g. described in W. Wohlleben, H. Schuch, "Measurement of Particle Size Distribution of Polymer Latexes", 2010, Editors: L. Gugliotta, J. Vega, p. 129-153).

In one preferred embodiment, the graft copolymer (A-1) comprises a binary or trinary size distribution comprising (or consisting of)
(A-1a) at least one graft copolymer (A-1a) having an average particle size d₅₀ of the rubber particles in the ASA copolymer from 50 to 150 nm; and
(A-1b) at least one graft copolymer (A-1b) having an average particle size d₅₀ of the rubber particles in the ASA copolymer from 200 to 750 nm.

In a further preferred embodiment, the graft copolymer (A-1) comprises a binary or trinary size distribution comprising (or consisting of)
(A-1a) at least one graft copolymer (A-1a) having an average particle size d₅₀ of the rubber particles in the ASA copolymer from 50 to 150 nm or 70 to 100 nm; and
(A-1b) at least one graft copolymer (A-1b) having an average particle size d₅₀ of the rubber particles in the ASA copolymer from 200 to 750 nm or 400 to 600 nm.

In a preferred embodiment, a first basic rubber latex (L1) may be obtained from (co)polymerizing butyl acrylate and one or more crosslinking agents (e.g., tricyclodecenyl acrylate) in an aqueous solution that may comprise further ingredients such as, e.g., one or more salts (e.g., C12- to C18- paraffin sulfonic acid and/or sodium bicarbonate). The temperature of the reaction may be, for example, in the range of from 55 to 70°C. In a preferred embodiment, a mass ratio of butyl acrylate : tricyclodecenyl acrylate in the range of from 10: 1 to 100 : 1, preferably of from 40 : 1 to 80 : 1, is used for polymerization. The mass ratios and definitions of the components are preferably as described herein. More specific examples are also provided in the experimental section below.

In a preferred embodiment, a first graft rubber latex (component A-1a) may be obtained from (co)polymerizing a basic rubber latex (e.g., a first basic rubber latex L1 obtainable as described before) with styrene and acrylonitrile in an aqueous solution that may comprise further ingredients such as, e.g., one or more salts (e.g., sodium persulfate). The reaction temperature may be in the range of from 50 to 80 °C. Optionally, the obtained graft latex may be coagulated. Coagulation may be achieved in a salt solution (e.g., a magnesium sulfate solution) at a temperature in the range of from 50 to 80°C. Coagulation may optionally be followed by sintering (e.g., at a temperature in the range of from 80 to 150°C). The mass ratios and definitions of the components are preferably as described herein. More specific examples are also provided in the experimental section below.

In a preferred embodiment, a second basic rubber latex (L2) may be obtained from (co)polymerizing butyl acrylate and one or more crosslinking agents (e.g., tricyclodecenyl acrylate) in the presence of a first basic rubber latex such as that described as L1 above in an aqueous solution that may comprise further ingredients such as, e.g., one or more salts (e.g., sodium bicarbonate, sodium persulfate and/or C12- to C18-paraffin sulfonic acid). The temperature of the reaction may be, for example, in the range of from 55 to 70°C. In a preferred embodiment, a mass ratio of butyl acrylate : tricyclodecenyl acrylate in the range of from 10: 1 to 100 : 1, preferably of from 40 : 1 to 80 : 1, is used for polymerization. The mass ratios and definitions of the components are preferably as described herein. More specific examples are also provided in the experimental section below.

In a preferred embodiment, a second graft rubber latex (component A-1b) may be obtained from (co)polymerizing a basic rubber latex (e.g., a second basic rubber latex L2 obtainable as described before) with styrene and acrylonitrile in an aqueous solution that may comprise further ingredients such as, e.g., one or more salts (e.g., sodium persulfate). The reaction temperature may be in the range of from 50 to 80 °C. Optionally, the obtained graft latex may be coagulated. Coagulation may be achieved in a salt solution (e.g., a magnesium sulfate solution) at a temperature in the range of from 70 to 99°C. Coagulation may optionally be followed by sintering (e.g., at a temperature in the range of from 80 to 150°C). The mass ratios and definitions of the components are preferably as described herein. More specific examples are also provided in the experimental section below.

### Thermoplastic Matrix (Component A-2)

In a preferred embodiment, the at least one thermoplastic matrix (A-2) comprises a copolymer which contains at least one vinyl cyanide repeating unit and at least one vinylaromatic repeating unit. In a preferred embodiment, throughout the present invention, the vinyl cyanide repeating unit is derived from acrylonitrile. In a preferred embodiment, throughout the present invention, the vinylaromatic repeating unit is derived from styrene, α-methyl styrene or a combination thereof.

In a more preferred embodiment, the at least one thermoplastic matrix (A-2) comprises a copolymer which contains acrylonitrile repeating units and at least one vinylaromatic repeating unit selected from styrene, α-methyl styrene and a combination thereof, in particular styrene. A copolymer that comprises or consists of acrylonitrile and styrene may also be designated as poly(styrene-acrylonitrile) (SAN). A copolymer that comprises or consists of acrylonitrile and α-methyl styrene may also be designated as poly(α-methyl styrene/acrylonitrile) (AMSAN).

Poly(styrene-acrylonitrile) (SAN) and/or poly(α-methyl styrene/acrylonitrile) (AMSAN) copolymers may be used as thermoplastic polymer (A-2). In general, any SAN and/or AMSAN copolymer known in in the art may be used within the subject-matter of the present invention.

In a preferred embodiment, the at least one thermoplastic polymer composition (A) comprises at least one copolymer (A-2) comprising (or consisting of):

| | |
|---|---|
| 18 to 45 wt.-% | based on the total weight of (A-2), of at least one vinyl cyanide repeating unit, in particular acrylonitrile; and |
| 55 to 82 wt.-% | based on the total weight of (A-2), of at least one vinylaromatic repeating unit, in particular a vinylaromatic repeating unit derived from styrene and/or α-methyl styrene. |

In a preferred embodiment, the SAN and AMSAN copolymers of the present invention contain:

| | |
|---|---|
| from 50 to 99 wt.-%, | based on the total weight of the SAN and/or AMSAN copolymer, of at least one member selected from the group consisting of styrene and α-methyl styrene; and |
| from 1 to 50 wt.-%, | based on the total weight of the SAN and/or AMSAN copolymer, of acrylonitrile. |

The weight average molecular weight (as determined by gel permeation chromatography relative to polystyrene as standard) of the SAN or AMSAN copolymer may be in the range of 15,000 to 200,000 g/mol, preferably in the range of 30,000 to 150,000 g/mol.

In a preferred embodiment, the ratios by weight of the components making up the SAN or AMSAN copolymer are 60 to 95 wt.-%, based on the total weight of the SAN and/or AMSAN copolymer, of styrene and/or α-methyl styrene, and 40 to 5 wt.-%, based on the total weight of the SAN and/or AMSAN copolymer, of acrylonitrile.

In a preferred embodiment, SAN or AMSAN containing proportions of incorporated acrylonitrile monomer units of < 36 wt.-%, based on the total weight of the SAN and/or AMSAN copolymer may be used.

In a preferred embodiment, copolymers of styrene with acrylonitrile of the SAN or AMSAN type incorporating comparatively little acrylonitrile (not more than 35 wt.-%, based on the total weight of the SAN and/or AMSAN copolymer) are used.

Among the afore-mentioned, most preferred SAN or AMSAN copolymers are those having a viscosity number VN (determined according to DIN 53726 at 25°C, 0.5% by weight in dimethylformamide) of from 50 to 120 ml/g are in particular preferred.

As used herein, as far as not otherwise defined, all measurement norms such as, e.g., DIN norms and PV norms, preferably refer to the version that was up-to-date in August 2019.

The copolymers of SAN or AMSAN component are known and the methods for their preparation, for instance, by radical polymerization, more particularly by emulsion, suspension, solution and bulk polymerization are also well documented in the literature.

### Thermoplastic Polymer Composition (A)

In a preferred embodiment, the at least one thermoplastic polymer composition (A) comprises (or consists of):
(A-1) 5 to 50 wt.-%, based on the total weight of the thermoplastic polymer composition (A), of at least one graft copolymer (A-1) comprising or consisting of an acrylonitrile styrene acrylate (ASA) copolymer having an average particle size d₅₀ of the rubber particles in the ASA copolymer from 50 to 1000 nm, wherein the average particle size is determined by scattered light measurement;
(A-2) 20 to 95 wt.-%, based on the total weight of the thermoplastic polymer composition (A), of at least one thermoplastic matrix (A-2) comprising 18 to 45 wt.-% of at least one vinyl cyanide repeating unit, in particular acrylonitrile, and 55 to 82 wt.-% of at least one vinylaromatic repeating unit, in particular an vinylaromatic repeating unit derived from styrene and/or α-methyl styrene; and
(A-3) 0 to 75 wt.-%, based on the total weight of the thermoplastic polymer composition (A), of one or more additional thermoplastic polymers (A-3), in particular one or more additional thermoplastic polymers (A-3) selected from the group consisting of polycarbonate (PC), polyamide (PA), and mixtures thereof,
wherein components (A-1), (A-2) and (A-3) sum up to 100 wt.-% of the thermoplastic polymer composition (A).

In another preferred embodiment, the at least one thermoplastic polymer composition (A) comprises 5 to 50 wt.-%, preferably 7 to 50 wt.-%, in particular 10 to 45 wt.-%, based on the total weight of thermoplastic polymer composition (A), of at least one styrene-based graft copolymer (A-1) and 0 to 95 wt.-%, preferably 20 to 93 wt.-%, in particular 45 to 90 wt.-%, based on the total weight of thermoplastic polymer composition (A), of at least one thermoplastic matrix (A-2) selected from poly(styrene-acrylonitrile) (SAN), poly(α-methyl styrene-acrylonitrile) (AMSAN) and mixtures thereof. The remainder of the thermoplastic polymer composition (A) is optionally composed of one or more additional thermoplastic polymers (A-3), in particular one or more additional thermoplastic polymers (A-3) selected from the group consisting of polycarbonate (PC), polyamide (PA), and mixtures thereof.

In another preferred embodiment, the at least one thermoplastic polymer composition (A) comprises 20 to 50 wt.-%, preferably 30 to 40 wt.-%, based on the total weight of thermoplastic polymer composition (A), of at least one styrene-based graft copolymer (A-1) and 40 to 80 wt.-%, preferably 60 to 70 wt.-%, based on the total weight of thermoplastic polymer composition (A), of at least one thermoplastic matrix (A-2) selected from poly(styrene-acrylonitrile) (SAN), poly(α-methyl styrene-acrylonitrile) (AMSAN) and mixtures thereof. The remainder of the thermoplastic polymer composition (A) is optionally composed of one or more additional thermoplastic polymers (A-3), in particular one or more additional thermoplastic polymers (A-3) selected from the group consisting of polycarbonate (PC), polyamide (PA), and mixtures thereof.

In another preferred embodiment, the at least one thermoplastic polymer composition (A) comprises 5 to 50 wt.-%, preferably 20 to 40 wt.-%, based on the total weight of thermoplastic polymer composition (A), of at least one styrene-based graft copolymer (A-1) and 40 to 80 wt.-%, preferably 60 to 70 wt.-%, based on the total weight of thermoplastic polymer composition (A), of a thermoplastic matrix (A-2) comprising 40 to 60 wt.- % of SAN and 60 to 40 wt.-% AMSAN, preferably 45 to 55 wt.-% of SAN and 55 to 45 wt.-% AMSAN, based on the total weight of the thermoplastic matrix (A-2). The remainder of the thermoplastic polymer composition (A) is optionally composed of one or more additional thermoplastic polymers (A-3), in particular one or more additional thermoplastic polymers (A-3) selected from the group consisting of polycarbonate (PC), polyamide (PA), and mixtures thereof.

In another preferred embodiment, the at least one thermoplastic polymer composition (A) comprises from 5 to 50 wt.-%, based on the total weight of thermoplastic polymer composition (A), of at least one constituent A-1; from 5 to 80 wt.-% based on the total weight of thermoplastic polymer composition (A), of at least one constituent A-2, selected from poly(styrene-acrylonitrile) (SAN), poly(α-methyl styrene-acrylonitrile) (AMSAN), and mixtures thereof; and from 0 to 75 wt.-%, in particular from 40 to 55 wt.-%, based on the total weight of the thermoplastic polymer composition (A), of a further polymer component (A-3), selected from polycarbonate (PC), polyamide (PA) and mixtures thereof. In particular, component (A-3) is one or more polycarbonates (PC).

In a preferred embodiment, the at least one thermoplastic polymer composition (A) comprises 0 to 75 wt.-%, from 10 to 70 wt.-%, from 20 to 65 wt.-%, from 30 to 60 wt.-%, or from 40 to 55 wt.-%, based on the total weight of the polymer composition (A), of a further polymer component (A-3).

In a preferred embodiment, the at least one thermoplastic polymer composition (A) comprises 0 to 75 wt.-%, from 10 to 70 wt.-%, from 20 to 65 wt.-%, from 30 to 60 wt.-%, or from 40 to 55 wt.-%, based on the total weight of a further polymer component (A-3), wherein A-3 is selected from polycarbonate (PC), polyamide (PA) and mixtures thereof, in particular wherein A-3 is one or more polycarbonates (PC).

In another preferred embodiment, the at least one thermoplastic polymer composition (A) comprises (or consists of):
(A-1) 5 to 50 wt.-%, more preferably 20 to 40 wt.-%, based on the total weight of the thermoplastic polymer composition (A), of at least one graft copolymer (A-1); and
(A-2) 20 to 65 wt.-%, more preferably 25 to 40 wt.-%, based on the total weight of the thermoplastic polymer composition (A), of at least one thermoplastic matrix (A-2) comprising at least one vinyl cyanide repeating unit and at least one vinylaromatic repeating unit, and,
(A-3) 0 to 75 wt.-%, preferably 30 to 75 wt.-%, more preferably 40 to 55 wt.-%, based on the total weight of the thermoplastic polymer composition (A), of one or more additional thermoplastic polymers (A-3), in particular one or more polycarbonate polymers.

In another preferred embodiment, the at least one thermoplastic polymer composition (A) comprises (or consists of):
(A-1) 5 to 50 wt.-%, more preferably 20 to 40 wt.-%, based on the total weight of the thermoplastic polymer composition (A), of at least one graft copolymer (A-1) comprising or consisting of an acrylonitrile styrene acrylate (ASA) having an average particle size d₅₀ of the rubber particles in the ASA copolymer from 50 to 1000 nm, wherein the average particle size is determined by scattered light measurement; and
(A-2) 20 to 65 wt.-%, more preferably 25 to 40 wt.-%, based on the total weight of the thermoplastic polymer composition (A), of at least one thermoplastic matrix (A-2) comprising 18 to 45 wt.-% of at least one vinyl cyanide repeating unit and 55 to 82 wt.-% of at least one vinylaromatic repeating unit, and,
(A-3) 0 to 75 wt.-%, preferably 30 to 75 wt.-%, more preferably 40 to 55 wt.-%, based on the total weight of the thermoplastic polymer composition (A), of one or more additional thermoplastic polymers (A-3), in particular one or more polycarbonate polymers.

### Additional Thermoplastic Polymers (A-3)

The thermoplastic polymer composition (A) may optionally comprise one or more additional thermoplastic polymers (A-3), which are preferably selected from the group consisting of polycarbonate (PC), polyamide (PA), and mixtures thereof.

### Polycarbonate Component

Any polycarbonate may be used as polycarbonate component in the scope of the present invention. Polycarbonate includes one or more, preferably one or two, more preferably one aromatic polycarbonate. Aromatic polycarbonate includes for example polycondensation products, for example aromatic polycarbonates, aromatic polyester carbonates.

Aromatic polycarbonates and/or aromatic polyester carbonates which are suitable according to the invention are known from the literature or may be prepared by processes known from the literature (for the preparation of aromatic polycarbonates see, for example, DE-B 1 495 626, DE-A 2 232 877, DE-A 2 703 376, DE-A 2 714 544, DE-A 3 000 610 and DE-A 3 832 396). The preparation of aromatic polycarbonates may be carried out, e.g., by reaction of diphenols with carbonic acid halides, preferably phosgene, and/or with aromatic dicarboxylic acid dihalides, preferably benzenedicarboxylic acid dihalides, by the phase interface process, optionally using chain terminators, for example monophenols, and optionally using branching agents which are trifunctional or more than trifunctional, for example triphenols or tetraphenols.

A preparation via a melt polymerization process by reaction of diphenols with, for example, diphenyl carbonate is also possible.

Diphenols for the preparation of the aromatic polycarbonates and/or aromatic polyester carbonates are preferably those of the formula (IV) 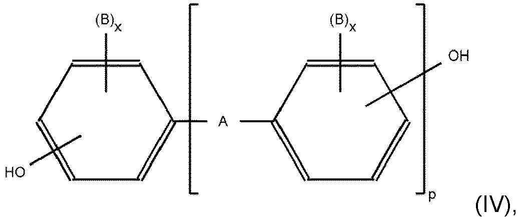 wherein A is a single bond, C₁ to Cs-alkylene, C₂ to Cs-alkylidene, C₅ to C₆-cyclo-alkylidene, -O-, -SO-, -CO-, -S-, -SO₂-, C₆ to C₁₂-arylene, on to which further aromatic rings optionally containing heteroatoms may be fused, or a radical of the formula (V) or (VI) 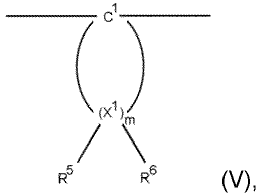 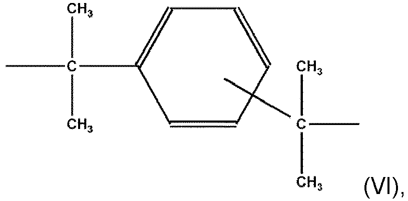
B in each case is C₁ to C₁₂-alkyl, preferably methyl, or halogen, preferably chlorine and/or bromine,
x in each case independently of one another, is 0, 1 or 2,
p is 1 or 0 and
R⁵ and R⁶ individually for each X¹ and independently of one another denote hydrogen or C₁ to C₆-alkyl, preferably hydrogen, methyl or ethyl,
X¹ denotes carbon and
m denotes an integer from 4 to 7, preferably 4 or 5, with the proviso that on at least one atom X¹, R⁵ and R⁶ are simultaneously alkyl.

Preferred diphenols are hydroquinone, resorcinol, dihydroxydiphenols, bis-(hydroxyphenyl)-C₁-C₅-alkanes, bis-(hydroxyphenyl)-C₅-C₆-cycloalkanes, bis-(hydroxyphenyl)ethers, bis-(hydroxyphenyl)sulfoxides, bis-(hydroxyphenyl)ketones, bis-(hydroxyphenyl)sulfones and α,α-bis-(hydroxyphenyl)-diisopropyl-benzenes and nucleus-brominated and/or nucleus-chlorinated derivatives thereof. Particularly preferred diphenols are 4,4'-dihydroxydiphenyl, bisphenol A, 2,4-bis-(4-hydroxyphenyl)-2-methylbutane, 1,1-bis-(4-hydroxyphenyl)-cyclohexane, 1,1-bis-(4-hydroxyphenyl)-3,3,5-trimethylcyclohexane, 4,4'-dihydroxydiphenyl sulfide, 4,4'-dihydroxydiphenyl sulfone and di- and tetrabrominated or chlorinated derivatives thereof, such as, for example, 2,2-bis-(3-chloro-4-hydroxyphenyl)-propane, 2,2-bis-(3,5-dichloro-4-hydroxyphenyl)-propane or 2,2-bis-(3,5-dibromo-4-hydroxyphenyl)-propane. 2,2-bis-(4-hydroxyphenyl)-propane (bisphenol A) is particularly preferred. The diphenols may be employed individually or as any desired mixtures. The diphenols are known from the literature or obtainable by processes known from the literature.

Chain terminators which are suitable for the preparation of the thermoplastic, aromatic polycarbonates may be, for example, phenol, p-chlorophenol, p-tert-butylphenol or 2,4,6-tribromophenol, and also long-chain alkylphenols, such as 4-[2-(2,4,4-trimethylpentyl)]-phenol, 4-(1,3-tetramethylbutyl)-phenol according to DE-A 2 842 005 or monoalkylphenols or dialkylphenols having a total of 8 to 20 carbon atoms in the alkyl substituents, such as 3,5-di-tert-butylphenol, p-iso-octylphenol, p-tert-octylphenol, p-dodecylphenol and 2-(3,5-dimethylheptyl)-phenol and 4-(3,5-dimethylheptyl)-phenol. The amount of chain terminators to be employed may be in general between 0.5 mol % and 10 mol %, based on the sum of the moles of the particular diphenols employed.

In a preferred embodiment, polycarbonates in the sense of the present invention are thermoplastic, aromatic polycarbonates having an average weight-average molecular weights (M_{W}, measured e.g. by means of an ultracentrifuge or by scattered light measurement) of from 10,000 to 200,000 g/mol, preferably 15,000 to 80,000 g/mol, particularly preferably 24,000 to 32,000 g/mol.

The thermoplastic, aromatic polycarbonates may be branched in a known manner, and in particular preferably by incorporation of from 0.05 to 2.0 mol %, based on the sum of the diphenols employed, of compounds which are trifunctional or more than trifunctional, for example those having three and more phenolic groups. Both homopolycarbonates and copolycarbonates are suitable.

The aromatic polyester carbonates may be either linear or branched in a known manner (in this context see DE-A 2 940 024 and DE-A 3 007 934). Branching agents which may be used are, for example, carboxylic acid chlorides which are trifunctional or more than trifunctional, such as trimesic acid trichloride, cyanuric acid trichloride, 3,3',4,4'-benzophenone-tetracarboxylic acid tetrachloride, 1,4,5,8-naphthalenetetracarboxylic acid tetrachloride or pyromellitic acid tetrachloride, in amounts of from 0.01 to 1.0 mol % (based on the dicarboxylic acid dichlorides employed), or phenols which are trifunctional or more than trifunctional, such as phloroglucinol, 4,6-dimethyl-2,4,6-tri-(4-hydroxyphenyl)-hept-2-ene, 4,6-dimethyl-2,4,6-tri-(4-hydroxyphenyl)-heptane, 1,3,5-tri-(4-hydroxyphenyl)-benzene, 1,1,1-tri-(4-hydroxyphenyl)-ethane, tri-(4-hydroxyphenyl)-phenylmethane, 2,2-bis-[4,4-bis-(4-hydroxyphenyl)-cyclohexyl]-propane, 2,4-bis-(4-hydroxyphenyl-isopropyl)-phenol, tetra-(4-hydroxyphenyl)-methane, 2,6-bis-(2-hydroxy-5-methyl-benzyl)-4-methyl-phenol, 2-(4-hydroxyphenyl)-2-(2,4-dihydroxyphenyl)-propane, tetra-(4-[4-hydroxyphenyl-isopropyl]-phenoxy)-methane and 1,4-bis-[4,4'-dihydroxytriphenyl)-methyl]-benzene, in amounts of from 0.01 to 1.0 mol %, based on the diphenols employed. Phenolic branching agents may be initially introduced into the reaction vessel with the diphenols, and acid chloride branching agents may be introduced together with the acid dichlorides.

The content of carbonate structural units in the thermoplastic, aromatic polyester carbonates may be varied as desired. Preferably, the content of carbonate groups is up to 100 mol %, in particular up to 80 mol %, particularly preferably up to 50 mol %, based on the sum of ester groups and carbonate groups. Both the ester and the carbonate content of the aromatic polyester carbonates may be present in the polycondensate in the form of blocks or in random distribution.

The relative solution viscosity (ηᵣₑₗ) of the aromatic polycarbonates and polyester carbonates is in the range of 1.18 to 1.4, preferably 1.20 to 1.32 (measured on solutions of 0.5 g polycarbonate or polyester carbonate in 100 ml methylene chloride solution at 25° C).

The thermoplastic, aromatic polycarbonates and polyester carbonates may be employed by themselves or in any desired mixture of one or more, preferably one to three or one or two thereof. Most preferably only one type of polycarbonate is used. Preferably the aromatic polycarbonate is a polycarbonate based on bisphenol A and phosgene, which includes polycarbonates that have been prepared from corresponding precursors or synthetic building blocks of bisphenol A and phosgene. These preferred aromatic polycarbonates may be linear or branched due to the presence of branching sites.

### Polyamide Component

Any polyamide may be used as polyamide component in the scope of the present invention. Examples for suitable polyamides are known homopolyamides, co-polyamides and mixtures of such polyamides. They may be semi-crystalline and/or amorphous polyamides. Suitable semi-crystalline polyamides are polyamide-6, polyamide-6,6, mixtures and corresponding copolymers of those components. Also included are semi-crystalline polyamides the acid component of which consists wholly or partially of terephthalic acid and/or isophthalic acid and/or suberic acid and/or sebacic acid and/or azelaic acid and/or adipic acid and/or cyclohexanedicarboxylic acid, the diamine component of which consists wholly or partially of m- and/or p-xylylene-diamine and/or hexamethylenediamine and/or 2,2,4-trimethylhexamethylenediamine and/or 2,2,4-trimethylhexamethylenediamine and/or isophoronediamine, and the composition of which is in principle known. Mention may also be made of polyamides that are prepared wholly or partially from lactams having from 7 to 12 carbon atoms in the ring, optionally with the concomitant use of one or more of the above-mentioned starting components.

Particularly preferred semi-crystalline polyamides are polyamide-6 and polyamide-6,6 and mixtures thereof. Known products may be used as amorphous polyamides. They are obtained by polycondensation of diamines, such as ethylenediamine, hexamethylenediamine, decamethylenediamine, 2,2,4- and/or 2,4,4-trimethylhexamethylene-diamine, m- and/or p-xylylene-diamine, bis-(4-aminocyclohexyl)-methane, bis-(4-aminocyclohexyl)-propane, 3,3'-dimethyl-4,4'-diamino-dicyclohexylmethane, 3-aminomethyl-3,5,5-trimethylcyclohexylamine, 2,5- and/or 2,6-bis-(aminomethyl)-norbornane and/or 1,4-diaminomethylcyclohexane, with dicarboxylic acids such as oxalic acid, adipic acid, azelaic acid, azelaic acid, decanedicarboxylic acid, heptadecanedicarboxylic acid, 2,2,4- and/or 2,4,4-trimethyladipic acid, isophthalic acid and terephthalic acid.

Also suitable are copolymers obtained by polycondensation of a plurality of monomers, as well as copolymers prepared with the addition of aminocarboxylic acids such as ε-aminocaproic acid, ω-aminoundecanoic acid or ω-aminolauric acid or their lactams. Particularly suitable amorphous polyamides are the polyamides prepared from isophthalic acid, hexamethylenediamine and further diamines such as 4,4'-diaminodicyclohexylmethane, isophoronediamine, 2,2,4- and/or 2,4,4-trimethylhexamethylenediamine, 2,5- and/or 2,6-bis-(aminomethyl)-norbornene; or from isophthalic acid, 4,4'-diamino-dicyclohexylmethane and ε-caprolactam; or from isophthalic acid, 3,3'-dimethyl-4,4'-diaminodicyclohexylmethane and laurinlactam; or from terephthalic acid and the isomeric mixture of 2,2,4- and/or 2,4,4-trimethylhexamethylenediamine. Instead of pure 4,4'-diaminodicyclohexylmethane it is also possible to use mixtures of the position-isomeric di-aminodicyclohexylmethanes, which are composed of from 70 to 99 mol % of the 4,4'-diamino isomer, from 1 to 30 mol % of the 2,4'-diamino isomer, from 0 to 2 mol % of the 2,2'-diamino isomer and optionally corresponding to more highly condensed diamines, which are obtained by hydrogenation of industrial grade diaminodiphenylmethane. Up to 30% of the isophthalic acid may be replaced by terephthalic acid.

The polyamides preferably have a relative viscosity (measured on a 1 wt. % solution in m-cresol or 1 % (weight/volume) solution in 96 wt. % sulfuric acid at 25°C) of from 2.0 to 5.0, particularly preferably from 2.5 to 4.0.

### Hindered Amine Light Stabilizing Composition (Component B)

According to the present invention, the molding composition (P) comprises at least one hindered amine light stabilizing composition (B) comprising:
(B-1) 0.1 to 0.9 wt.-%, preferably 0.15 to 0.6 wt.-%, more preferably 0.2 to 0.4 wt.-%, based on the total weight of the molding composition (P), of a hindered amine light stabilizer mixture having a monopiperidine structure with at least one alkyl group at each of the 2 and 6 positions of the monopiperidine structure and saturated or unsaturated C12-C21 ester moieties at at least one of the 3, 4 or 5 positions of the monopiperidine structures,
(B-2) 0 to 0.4 wt.-%, preferably 0.1 to 0.4 wt.-%, more preferably 0.1 to 0.35 wt.-%, based on the total weight of the molding composition (P), of at least one hindered amine light stabilizer having a dipiperidine structure with at least one alkyl group at each of the 2 and 6 positions of the dipiperidine structure and not containing any saturated or unsaturated C12-C21 ester moieties at one of the 3, 4 or 5 positions of the piperidine structures, wherein the at least one hindered amine light stabilizer having a dipiperidine structure has a molecular weight of 200-550 g/mol, and
(B-3) 0.5 to 2 wt.-%, preferably 0.51 to 1.8 wt.-%, more preferably 0.55 to 1.5 wt.-%, based on the total weight of the molding composition (P), of at least one hindered amine light stabilizer having a polymeric structure comprising piperidine groups with at least one alkyl group at each of the 2 and 6 positions of the piperidine groups and not containing any saturated or unsaturated C12-C21 ester moieties at one of the 3, 4 or 5 positions of the piperidine groups, wherein the at least one hindered amine light stabilizer having a polymeric structure has a molecular weight of 1000-4000 g/mol, preferably of 1500-4000 g/mol, more preferably 2000-4000 g/mol.

The molding composition (P) comprises the (various) components of the hindered amine light stabilizing composition (B).

Suitable hindered amine light stabilizers are substances including piperidine structures with at least one alkyl group at each of the 2 and 6 positions of the piperidine structures. Particular preferred are compounds having piperidine structures with two alkyl groups at each of the 2 and 6 positions. In a more preferred embodiment, the alkyl groups are selected from C1-C5 alkyl groups, in particular C1-C3 alkyl groups.

The hindered amine light stabilizer (B-1) of the molding composition (P) in accordance with the present invention is at least one compound having a monopiperidine structure with at least one alkyl group at each of the 2 and 6 positions of the monopiperidine structure and saturated or unsaturated C12-C21 ester moieties at at least one of the 3, 4 or 5 positions of the monopiperidine structures. Such hindered amine stabilizers can be present as mixture of substances with different fatty acid chains. Preferably, the ester moieties comprise or consist of saturated ester moieties.

Even more preferably, the ester moieties comprise or consist of C15-C20-saturated ester moieties at at least one of the 3, 4 or 5 positions of the monopiperidine structures, in particular at least at the 4 position.

A particular preferred hindered amine light stabilizer having a monopiperidine structure suitable to be used as component (B-1) according to the present invention is represented by the chemical formula (I):

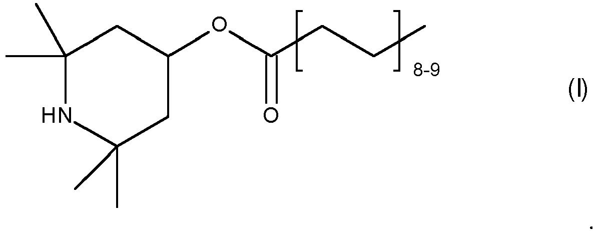

This sterically hindered amine (2,2,6,6-tetramethyl-4-piperidinyl stearate, CAS number 167078-06-0, or 86403-32-9, or 24860-22-8) and production thereof are known to the person skilled in the art and described in the literature (Carlsson et al., Can. Journal of Polymer Science, Polymer Chemistry Edition (1982), 20(2), 575-82). It is marketed as Cyasorb^{®} UV-3853 by the company Solvay. This substance with a molecular weight below 516 g/mol is a waxy and sticky product with melting temperature at around 30°C.

As dosage in pure solid form in compounding of thermoplastic compositions represents a technical hurdle this product is usually supplied and used as master batch. In a preferred embodiment the substance is thus added in form of a master batch comprising 20 to 70 wt.-%, preferably 40 to 60 wt.-%, based on the total weight of the master batch, of 2,2,6,6-tetramethyl-4-piperidinyl stearate and a copolymer of a vinylaromatic olefin and acrylonitrile as matrix polymer. Preferably, the matrix polymer is selected from poly(styrene-acrylonitrile) (SAN), poly(α-methyl styrene/acrylonitrile) (AMSAN), and/or poly(styrene-methyl methacrylate) (SMMA).

The hindered amine light stabilizer (B-2) of the molding composition (P) in accordance with the present invention is at least one compound having a dipiperidine structure with at least one alkyl group at each of the 2 and 6 positions of the dipiperidine structure and not containing any saturated or unsaturated C12-C21 ester moieties at one of the 3, 4 or 5 positions of the piperidine structures, wherein the at least one hindered amine light stabilizer having a dipiperidine structure has a molecular weight of 200-550 g/mol. Suitable hindered amine light stabilizer (B-2) comprise compounds comprising two piperidine structures which are connected via C3-C11-saturated or -unsaturated diester moieties which are bound to one of the 3, 4 or 5 position of the piperidine structures.

In a further preferred embodiment, the hindered amine light stabilizer (B-2) comprise compounds comprising two piperidine structures which are connected via C3-C11-saturated diester moieties, in particular C6-C10-saturated diester moieties, which are bound to one of the 3, 4 or 5 position of the piperidine structures, and not containing any satureted or unsaturated C12-C21 ester moieties at one of the 3, 4 or 5 positions of the piperidine structures.

A particular preferred hindered amine light stabilizer having a dipiperidine structure suitable to be used as component (B-2) according to the present invention is represented by the chemical formula (II):

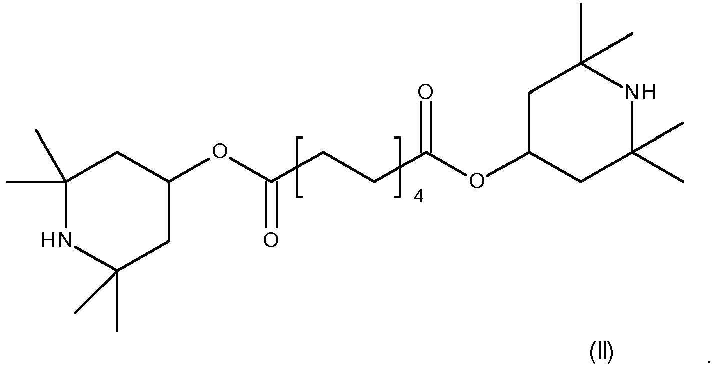

This sterically hindered amine (bis(2,2,6,6-tetramethylpiperidin-4-yl) sebacate, CAS number 52829-07-9) and production thereof are known to the person skilled in the art and are described in the literature (see by way of example U.S. Pat. No. 4,396,769 and the references cited therein). It is marketed as Tinuvin^{®} 770 by BASF SE and has a molecular weight of 481 g/mol.

Other suitable examples for component (B-2) are: bis(1,2,2,6,6-pentamethyl-4-piperidyl) sebacate (CAS 41556-26-7, Tinuvin^{®} 765 by BASF SE, molecular weight (MW) = 509 g/mol); N,N'-bisformyl-N,N'-bis-(2,2,6,6-tetramethyl-4-piperidinyl)-hexamethylendiamine (CAS 124172-53-8, Uvinul^{®} 4050 H by BASF SE, MW = 450 g/mol); N,N'-bis(2,2,6,6-tetramethyl-4-piperidyl)isophthalamide (CAS 42774-15-2, Nylostab^{®} S-EED^{®} by Clariant, MW = 443 g/mol).

The hindered amine light stabilizer (B-3) of the molding composition (P) in accordance with the present invention is at least one compound having a polymeric structure comprising piperidine groups with at least one alkyl group at each of the 2 and 6 positions of the piperidine groups and not containing any saturated or unsaturated C12-C21 ester moieties at one of the 3, 4 or 5 positions of the piperidine groups. The hindered amine light stabilizer (B-3) having a polymeric structure is defined as a compound comprising at least two, preferably at least three, repeating units derivable from polymerizable monomers and having a molecular weight of 1000-4000 g/mol, preferably of 1500-4000 g/mol, more preferably 2000-4000 g/mol.

A particular preferred hindered amine light stabilizer having a polymeric structure comprising piperidine groups suitable to be used as component (B-3) according to the present invention is represented by the chemical formula (III):

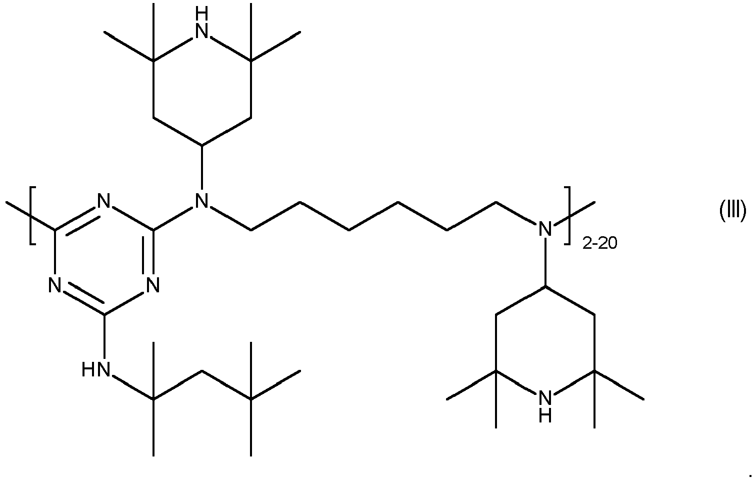

This sterically hindered amine (CAS number 71878-19-8) and production thereof are known to the person skilled in the art and are described in the literature (see by way of example EP-A-93 693 and the references cited therein). It is marketed as Chimassorb^{®} 944 by BASF SE with a molecular weight of 2100-3000 g/mol.

Other suitable examples for component (B-3) are: 1,6-Hexanediamine,N,N'-bis-(2,2,6,6-tetramethyl-4-piperidinyl)-polymer with 2,4,6-trichloro-1,3,5-triazine, reaction products with N-butyl-1-butanamine and N-butyl-2,2,6,6-tetramethyl-4-piperidinamine (CAS 192268-64-7, Chimassorb^{®} 2020 by BASF SE, MW = 2600-3400 g/mol); Butanedioic acid, dimethylester, polymer with 4-hydroxy-2,2,6,6- tetramethyl-1-piperidine ethanol (CAS 65447-77-0, Tinuvin^{®} 622 by BASF SE, MW = 3100 - 4000 g/mol); Alkenes, C20-24 alpha-, polymers with maleic anhydride, reaction products with 2,2,6,6-tetramethyl-4-piperidinamine (CAS 152261-33-1, Uvinul^{®} 5050 H by BASF SE, MW = 3000 - 4000 g/mol); 1,3,5-Triazine-2,4,6-triamine, N2,N2"-1,2-ethanediylbis[N2-[3-[[4,6-bis[butyl(1,2,2,6,6-pentamethyl-4-piperidinyl)amino]-1,3,5-triazin-2-yl]amino]propyl]-N',N"-dibutyl-N',N"-bis(1,2,2,6,6-pentamethyl-4-piperidinyl)- (CAS 106990-43-6, Sabostab^{®} UV 119 by SABO S.p.A., MW = 2286 g/mol); Poly[(6-morpholino-s-triazine-2,4-diyl)[2,2,6,6- tetramethyl-4-piperidyl) imino]-hexamethylene [(2,2,6,6-tetramethyl-4-piperidyl)imino]] (CAS 82451-48-7 or 90751-07-8, Cyasorb^{®} UV-3346 by Solvay, MW = 1600 g/mol); 1,6-Hexanediamine,N,N'-bis(2,2,6,6-tetramethyl-4-piperidinyl)-polymers with morpholine-2,4,6-trichloro-1,3,5-triazine (CAS 193098-40-7 or 219920-30-6, Cyasorb^{®} UV-3529 by Solvay).

The hindered amine light stabilizer (B-1) is present in the molding composition in an amount of 0.1 to 0.9 wt.-%, preferably 0.15 to 0.6 wt.-%, more preferably 0.2 to 0.4 wt.- %, based on the total weight of the molding composition (P).

The hindered amine light stabilizer (B-2) is optionally present in the molding composition in an amount of 0 to 0.4 wt.-%, preferably 0.1 to 0.4 wt.-%, more preferably 0.1 to 0.35 wt.-%, based on the total weight of the molding composition (P).

The hindered amine light stabilizer (B-3) is present in the molding composition in an amount of 0.5 to 2 wt.-%, preferably 0.51 to 1.8 wt.-%, more preferably 0.55 to 1.5 wt.- %, based on the total weight of the molding composition (P),

In one embodiment of the invention, the molding composition (P) comprises at least one hindered amine light stabilizing composition (B) comprising:
(B-1) 0.1 to 0.9 wt.-%, preferably 0.15 to 0.6 wt.-%, more preferably 0.2 to 0.4 wt.-%, based on the total weight of the molding composition (P), of a hindered amine light stabilizer mixture having a monopiperidine structure with at least one alkyl group at each of the 2 and 6 positions of the monopiperidine structure and saturated or unsaturated C12-C21 ester moieties at at least one of the 3, 4 or 5 positions of the monopiperidine structures, and
(B-3) 0.5 to 2 wt.-%, preferably 0.51 to 1.8 wt.-%, more preferably 0.55 to 1.5 wt.-%, based on the total weight of the molding composition (P), of at least one hindered amine light stabilizer having a polymeric structure comprising piperidine groups with at least one alkyl group at each of the 2 and 6 positions of the piperidine groups and not containing any saturated or unsaturated C12-C21 ester moieties at one of the 3, 4 or 5 positions of the piperidine groups, wherein the at least one hindered amine light stabilizer having a polymeric structure has a molecular weight of 1000-4000 g/mol, preferably of 1500-4000 g/mol, more preferably 2000-4000 g/mol;
and is substantially free of the at least one hindered amine light stabilizer (B-2) having a dipiperidine structure with at least one alkyl group at each of the 2 and 6 positions of the dipiperidine structure and not containing any saturated or unsaturated C12-C21 ester moieties at one of the 3, 4 or 5 positions of the piperidine structures, wherein the at least one hindered amine light stabilizer having a dipiperidine structure has a molecular weight of 200-550 g/mol.

In a preferred embodiment of the present invention, the molding composition (P) comprises at least one hindered amine light stabilizing composition (B) comprising:
(B-1) 0.1 to 0.9 wt.-%, preferably 0.15 to 0.6 wt.-%, more preferably 0.2 to 0.4 wt.-%, based on the total weight of the molding composition (P), of a compound represented by the chemical formula (I): 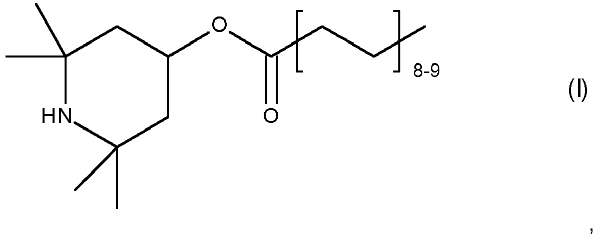
(B-2) 0 to 0.4 wt.-%, preferably 0.1 to 0.4 wt.-%, more preferably 0.1 to 0.35 wt.-%, based on the total weight of the molding composition (P), of a compound represented by the chemical formula (II): , and 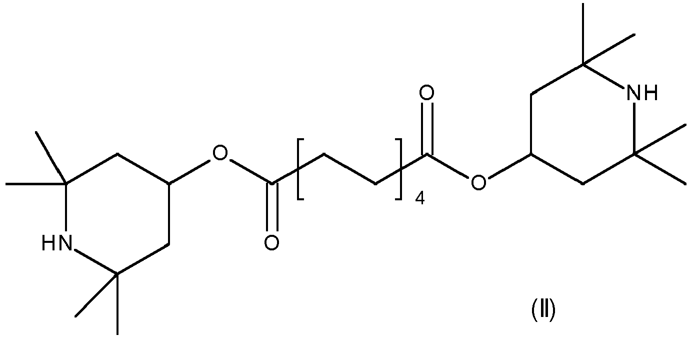
(B-3) 0.5 to 2 wt.-%, preferably 0.51 to 1.8 wt.-%, more preferably 0.55 to 1.5 wt.-%, based on the total weight of the molding composition (P), of a compound represented by the chemical formula (III):

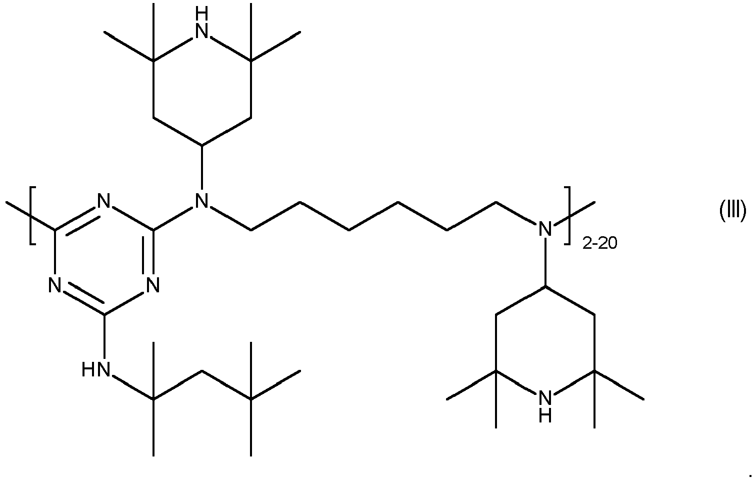

### Colorants, Dyes and Pigments (Optional Component C)

As indicated above, the molding composition (P) may further comprise 0 to 10 wt.-%, often 0.1 to 5 wt.-% of dyes, pigments, or colorants which may be added in form of master batches comprising the dyes, pigments, or colorants in a polymer matrix. In a preferred embodiment, the dyes, pigments, or colorants are added in form of a master batch comprising 20 to 70 wt.-% based on the total amount of the master batch, of dyes, pigments, colorants or mixtures thereof and 30 to 80 wt.-% based on the total amount of the master batch, a copolymer of an vinylaromatic olefin and acrylonitrile as matrix polymer. Preferably, the matrix polymer is selected from poly(styrene-acrylonitrile) (SAN), poly(α-methyl styrene/acrylonitrile) (AMSAN), and/or poly(styrene-methyl methacrylate) (SMMA).

Examples of suitable pigments include titanium dioxide, phthalocyanines, ultramarine blue, iron oxides and carbon black, and also the entire class of organic pigments. Examples of suitable colorants include all dyes that may be used for the transparent, semitransparent, or non-transparent coloring of polymers, in particular those suitable for coloring styrene copolymers.

In a preferred embodiment, the molding composition (P) comprises carbon black as component (C).

### Further Additives (Optional Component D)

As used herein, the one or more further additives (D) may be any additives usable in molding composition (P) and not described in any of the components (A), (B) or (C). For example, a further additive (D) may be selected from the group consisting of plasticizers, aliphatic amide waxes, aliphatic fatty acid esters, and further UV stabilizers that are not listed as component B.

Optionally, various additives may be added to the molding compounds in amounts of from 0 to 5 wt.-%, often 0.1 to 5 wt.-%, as assistants and processing additives. Suitable added additives (D) include all substances customarily employed for processing or finishing the polymers.

Additives (D) may be added in form of master batches comprising additives (D) in a polymer matrix. In a preferred embodiment, the additives (D) are added in form of a master batch comprising 20 to 70 wt.-%, preferably 40 to 60 wt.-%, based on the total amount of the master batch, of additives (D) or mixtures thereof and 30 to 80 wt.-%, preferably 40 to 60 wt.-%, based on the total amount of the master batch, a copolymer of an vinylaromatic olefin and acrylonitrile as matrix polymer.

Preferably, the matrix polymer is selected from poly(styrene-acrylonitrile) (SAN), poly(α-methyl styrene/acrylonitrile) (AMSAN), and/or poly(styrene-methyl methacrylate) (SMMA).

Examples of additives (D) include, for example, antistatic agents, antioxidants, flame retardants, stabilizers for improving thermal stability, stabilizers for increasing photostability, stabilizers for enhancing hydrolysis resistance and chemical resistance, anti-thermal decomposition agents and in particular lubricants that are useful for production of molded bodies/articles. These further added substances may be admixed at any stage of the manufacturing operation, but preferably at an early stage in order to profit early on from the stabilizing effects (or other specific effects) of the added substance.

Examples of suitable antistatic agents include amine derivatives such as N,N-bis(hydroxyalkyl)alkylamines or -alkyleneamines, polyethylene glycol esters, copolymers of ethylene oxide glycol and propylene oxide glycol (in particular two-block or three-block copolymers of ethylene oxide blocks and propylene oxide blocks), and glycerol mono- and distearates, and mixtures thereof.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units. Hydroquinones and hydroquinone analogs are also suitable, as are substituted compounds, and also antioxidants based on tocopherols and derivatives thereof. It is also possible to use mixtures of different antioxidants. It is possible in principle to use any compounds which are customary in the trade or suitable for styrene copolymers, for example antioxidants from the Irganox^{®} range. In addition to the phenolic antioxidants cited above by way of example, it is also possible to use so-called co-stabilizers, in particular phosphorus- or sulfur-containing co-stabilizers. These phosphorus- or sulfur-containing co-stabilizers are known to those skilled in the art.

Examples of suitable flame retardants that may be used include the halogen-containing or phosphorus-containing compounds known to the person skilled in the art, magnesium hydroxide, and also other commonly used compounds, or mixtures thereof.

Examples of suitable light stabilizers include various substituted resorcinols, salicylates, benzotriazoles and benzophenones.

Suitable matting agents include not only inorganic substances such as talc, glass beads or metal carbonates (for example MgCOs, CaCOs) but also polymer particles, in particular spherical particles having diameters D₅₀ greater than 1 µm, based on, for example, methyl methacrylate, styrene compounds, acrylonitrile or mixtures thereof. It is further also possible to use polymers comprising copolymerized acidic and/or basic monomers.

Examples of suitable antidrip agents include polytetrafluoroethylene (Teflon) polymers and ultrahigh molecular weight polystyrene (weight-average molar mass Mw above 2,000,000 g/mol).

Examples of fibrous/pulverulent fillers include carbon or glass fibers in the form of glass fabrics, glass mats, or filament glass rovings, chopped glass, glass beads, and wollastonite, particular preference being given to glass fibers. When glass fibers are used, they may be finished with a sizing and a coupling agent to improve compatibility with the blend components. The glass fibers incorporated may either take the form of short glass fibers or else continuous filaments (rovings).

Examples of suitable particulate fillers include carbon black, amorphous silica, magnesium carbonate, powdered quartz, mica, bentonites, talc, feldspar or, in particular, calcium silicates, such as wollastonite, and kaolin.

Examples of suitable stabilizers include hindered phenols but also vitamin E and / or compounds having analogous structures and also butylated condensation products of p-cresol and dicyclopentadiene. Other HALS stabilizers (hindered amine light stabilizers) not listed above as component B, benzophenones, resorcinols, salicylates, benzotriazoles are also suitable. Other suitable compounds include, for example, thiocarboxylic esters. Also usable are (C₆-C₂₀) alkyl esters of thiopropionic acid, in particular the stearyl esters and lauryl esters.

It is also possible to use the dilauryl ester of thiodipropionic acid (dilauryl thiodipropionate), the distearyl ester of thiodipropionic acid (distearyl thiodipropionate) or mixtures thereof. Examples of further additives include UV absorbers such as 2H-benzotriazol-2-yl-(4-methylphenol).

Suitable lubricants and demolding agents include stearic acids, stearyl alcohol, stearic esters, polyolefin waxes and/or generally higher fatty acids, derivatives thereof and corresponding fatty acid mixtures comprising 1 to 45 carbon atoms. In a further preferred embodiment, the composition comprises amide compounds having the formula R¹-CONH-R², wherein R¹ and R² are each independently selected from aliphatic, saturated or unsaturated hydrocarbon groups having 1 to 30 carbon atoms, preferably 12 to 24 carbon atoms, in particular 16 to 20 carbon atoms. In a further preferred embodiment of the invention, the composition may additionally comprise fatty acid ester compounds having the formula R³-CO-OR⁴, wherein R³ and R⁴ are each independently selected from aliphatic, saturated or unsaturated hydrocarbon groups having 1 to 45 carbon atoms, preferably 15 to 40 carbon atoms, in particular 25 to 35 carbon atoms. Also particularly suitable is ethylene-bis(stearamide).

In a further preferred embodiment, the molding composition (P) may comprise an organic, inorganic or mixed phosphate, in particular an alkaline metal or earth alkaline metal phosphate such as Ca₃(PO₄)₂ and/or an organophosphate having alkyl or aryl groups comprising 1 to 12 carbon atoms.

In a further preferred embodiment, molding composition (P) may further comprise a polyester modified polysiloxane, in particular a polyester-polysiloxane-block copolymer, preferably a [polyester-b-polysiloxane-b-polyester] triblock copolymer. Preferred examples of the polysiloxane moieties comprised in the polyester-polysiloxane-blockcopolymer are derived from poly(dimethylsiloxane), poly(diethylsiloxane), poly(dipropylsiloxane), poly(dibutylsiloxane), and mixtures thereof.

### Preparation of the molding composition (P)

The method according to the present invention may have any procedural steps suitable for conducting the claimed method.

In a preferred embodiment, the step of compounding the components comprises at least the following steps:
(i) providing the components (A) to (D) in the predetermined amounts to an optionally heatable mixing device; and
(ii) blending the components (A) to (D) in the optionally heatable mixing device at temperatures above the glass transition point of the components (A) to (D) to obtain the molding composition (P).

Optionally, a step in which a homogenous particulate material mixture is prepared from the components (A) to (D) may be carried out prior to step (ii). However, also when provided to the optionally heatable mixing device without previous mixing, a homogenous mixing is typically achieved in the optionally heatable mixing device.

Each of components (A) to (D) - as far as solid - may be provided in form of particulate materials having different particle sizes and particle size distributions (e.g., as pellets, granules and/or powders).

The particulate materials (A) to (D) may be provided to a mixing device in the required amounts and ratios as previously indicated and optionally mixed prior to the blending step (ii) in order to obtain a homogenous particulate material mixture. In a preferred embodiment, this may require 1 to 60, preferably 1 to 20, in particular 2 to 10 minutes, depending to the amount of particulate material to be mixed.

The thus obtained homogenous particulate material mixture is then transferred to an optionally heatable mixing apparatus and blended therein, producing a substantially liquid-melt polymer mixture.

"Substantially liquid-melt" means that the polymer mixture, as well as the predominant liquid-melt (softened) fraction, may further comprise a certain fraction of solid constituents, examples being unmelted fillers and reinforcing material such as glass fibers, metal flakes, or else unmelted pigments, colorants, etc. "Liquid-melt" means that the polymer mixture is at least of low fluidity, therefore having softened at least to an extent that it has plastic properties.

Mixing apparatuses used are those known by the person skilled in the art. Components (A) and (B), and - where included - (C) and/or (D) may be mixed, for example, by joint extrusion, kneading, or rolling, the aforementioned components necessarily having been isolated from the aqueous dispersion or from the aqueous solution obtained in the polymerization.

Examples of mixing apparatus for implementing the method include discontinuously operating, heated internal kneading devices with or without RAM, continuously operating kneaders, such as continuous internal kneaders, screw kneaders with axially oscillating screws, Banbury kneaders, furthermore extruders, and also roll mills, mixing roll mills with heated rollers, and calenders.

Optionally, the method may comprise a further step (iii) of cooling the blend obtained from step (ii) to temperatures below the glass transition point of the components (A) to (D) to obtain the molding composition (P).

A preferred mixing apparatus used is an extruder or a kneader. Particularly suitable for melt extrusion are, for example, single-screw or twin-screw extruders. A twin-screw extruder is preferred. In some cases, the mechanical energy introduced by the mixing apparatus in the course of mixing is enough to cause the mixture to melt, meaning that the mixing apparatus does not have to be heated. Otherwise, the mixing apparatus is generally heated.

The temperature is guided by the chemical and physical properties of the styrene-based polymer composition (A) and the components (B), (C) and (D) and should be selected such as to result in a substantially liquid-melt polymer mixture. On the other hand, the temperature is not to be unnecessarily high, in order to prevent thermal damage of the polymer mixture. The mechanical energy introduced may, however, also be high enough that the mixing apparatus may even require cooling. Mixing apparatus is operated customarily at 150 to 400, preferably 170 to 300°C.

In a preferred embodiment, a heatable twin-screw extruder and a speed of 50 to 150 rpm, preferably 60 to 100 rpm is employed. In a preferred embodiment, an extruding temperature of 170 to 270°C, preferably 210 to 250°C is employed to obtain the molding composition (P). The molding composition (P) may be directly used, e.g. in molding processes, preferably injection molding processes, or may be processed to form granules which may be subjected to molding processes afterwards. The molding processes are preferably carried out at temperatures of 170 to 270°C, in particular 210 to 250°C to result in a molded article.

Processing may be carried out using the known processes for thermoplastic processing, in particular production may be effected by thermoforming, extruding, injection molding, calendaring, blow molding, compression molding, press sintering, deep drawing or sintering, preferably by injection molding.

The present invention further relates to an article, in particular a molded article, prepared from a molding composition (P) or a polymer composition, comprising a molding composition (P) in combination with a further thermoplastic polymer as described above.

The article, in particular the molded article, may be prepared by any known processes for thermoplastic processing. In particular preparation may be effected by thermoforming, extruding, injection molding, calendaring, blow molding, compression molding, press sintering, deep drawing or sintering, preferably by injection molding.

The molding composition (P) and the article, in particular the molded article, may be advantageously used for the manufacture of components or articles for electronic devices, household goods and exterior and/or interior automotive parts, in particular for the manufacture of visible components or articles. A preferred application is the use of unpainted exterior automotive parts such as front grills or side mirrors.

### Applications and Properties

The present invention further relates to an article, in particular a molded article (T), prepared from a molding composition (P) or a polymer composition, comprising a molding composition (P) in combination with a further thermoplastic polymer as described above. The article, in particular the molded article, may be prepared by any known processes for thermoplastic processing. In particular preparation may be effected by thermoforming, extruding, injection molding, calendaring, blow molding, compression molding, press sintering, deep drawing or sintering, preferably by injection molding.

In particular, the molding composition (P) according to the invention may preferably be used for preparing a molded article (T) comprising high gloss surface areas with gloss levels above 75 gloss units prepared from a thermoplastic molding composition (P), wherein the gloss level is determined according to DIN EN ISO 2813 at a measuring angle of 60°.Thus, the invention also relates to a molded article (T) prepared from the molding composition (P), in particular a molded article (T) comprising high gloss surface areas with gloss levels above 75 gloss units, wherein the gloss level is determined according to DIN EN ISO 2813 at a measuring angle of 60°.

The molding composition (P) and the article, in particular the molded article (T), may be advantageously used for the manufacture of components or articles for electronic devices, household goods and exterior and/or interior automotive parts, in particular for the manufacture of visible components or articles. A preferred application is the use of unpainted exterior automotive parts such as front grills or side mirrors.

Molded articles (T) with preferably high gloss surface areas with gloss levels above 75 gloss units prepared from a molding composition (P) may be used in many application areas, wherein the gloss level is determined according to DIN EN ISO 2813 at a measuring angle of 60°. However, preferred applications may be found in unpainted exterior applications, preferably automotive applications.

Automotive producers using unpainted high gloss parts in exterior applications usually require that the surface experiences only minor appearance changes after 3200 h weathering with ISO 4892-2A conditions. Maximum acceptable appearance changes are usually accepted by automotive producers in the range of a color shift of dE < 6 and a gloss retention above 75% (i.e. a gloss level of above 75% of the gloss level before being subjected to artificial weathering) and thus this criterion shall be applied as definition of acceptable appearance change within this invention.

The molding composition (P) according to the present invention is characterized by its specific properties with respect to the quality of a high gloss surface area on a molded article (T) produced from said molding composition (P) after being subjected to artificial weathering. In particular, said high gloss surface area that exhibits a gloss level above 75 gloss units before any weathering exposure keeps a gloss level of above 75%, preferably above 77%, of the gloss level before being subjected to artificial weathering after being subjected to artificial weathering according to ISO 4892-2A for 3200 h, wherein the gloss level is determined according to DIN EN ISO 2813 at a measuring angle of 60°.

Additionally, a high gloss surface area on a molded article (T) produced from said molding composition (P) that exhibits a gloss level above 75 gloss units before any weathering exposure exhibits a color shift dE as measured in reference to the unexposed surface of below dE = 6, after being subjected to artificial weathering according to ISO 4892-2A for 3200 h, wherein the gloss level is determined according to DIN EN ISO 2813 at a measuring angle of 60°.

The invention also relates to a method for improving weathering resistance on high gloss surface molded articles (T) with gloss levels above 75 gloss units on at least a part of the surface area of the molded article (T) before being subjected to artificial weathering of a molding composition (P), wherein the gloss level is determined according to DIN EN ISO 2813 at a measuring angle of 60°,
wherein said method comprises the step of compounding the constituents (A) to (D), and wherein a high gloss surface molded article (T) obtained from the molding composition (P) exhibits the following: a color shift of a high gloss surface molded article (T) produced from the molding composition (P) subjected to artificial weathering according to ISO 4892-2A for 3200 h of below 25 % of the color shift of a high gloss surface molded article (T) produced from a comparative molding composition (P') molded and assessed with same conditions,
wherein the comparative molding composition (P') is obtained by compounding the components (A) to (D) contained in the molding composition (P) but containing less than 0.5 wt.-% of the at least one hindered amine light stabilizer (B-3), based on the total weight of the comparative molding composition (P').

The invention further relates to a method for reducing mold deposit formation upon the molding of high gloss surface molded articles (T) with gloss levels above 75 gloss units on at least a part of the surface area of the molded article (T), wherein the gloss level is determined according to DIN EN ISO 2813 at a measuring angle of 60°,
wherein said method comprises the step of compounding the constituents (A) to (D), and
wherein the reduction of mold deposit formation is observed as followed:
   Reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P") molded and assessed with same conditions,
wherein the comparative molding composition (P") is obtained by compounding the components (A) to (D) contained in the molding composition (P) with the difference that more than 0.4 wt.-% of the at least one hindered amine light stabilizer (B-2), based on the total weight of the comparative molding composition (P"), are used in the comparative molding composition (P").

The invention further relates to a method for improving weathering resistance on high gloss surface molded articles (T) with gloss levels above 75 gloss units on at least a part of the surface area of the molded article (T) before being subjected to artificial weathering of a molding composition (P), wherein the gloss level is determined according to DIN EN ISO 2813 at a measuring angle of 60°, and also for reducing mold deposit formation upon the molding of such high gloss surface molded articles (T),
wherein said method comprises the step of compounding the constituents (A) to (D), and wherein a high gloss surface molded article (T) obtained from the molding composition (P) exhibits the following:
a color shift of a high gloss surface molded article (T) produced from the molding composition (P) subjected to artificial weathering according to ISO 4892-2A for 3200 h of below 25 % of the color shift of a high gloss surface molded article (T) produced from a comparative molding composition (P‴) molded and assessed with same conditions,
and also a reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P‴) molded and assessed with same conditions,
wherein the comparative molding composition (P‴) is obtained by compounding the components (A) to (D) contained in the molding composition (P) but containing less than 0.5 wt.-% of at least one hindered amine light stabilizer (B-3) and more than at least 0.4 wt.-% of at least one hindered amine light stabilizer (B-2), each based on the total weight of the comparative molding composition (P‴).

The invention is further illustrated by the claims and examples.

### Examples and Components

| | |
|---|---|
| Component A: | The thermoplastic polymer composition (A) is an acrylonitrile styrene acrylate (ASA), i.e., an impact modified poly(styrene-acrylonitrile) (SAN) comprising SAN grafted on a butyl acrylate (BA) core (BA-g-SAN) (A-1a) and (A-1b) with the below-specified properties. |
| | Thermoplastic matrix polymer component A-2a: AMSAN (30 wt.-% ACN, 70 wt.-% α-methyl styrene, VN 57 ml/g) |
| | Thermoplastic matrix polymer component A-2b: SAN (35 % ACN, VN 80 ml/g) |
| Component B1: | hindered amine light stabilizer (HALS) Cyasorb^{®} UV-3853 from Solvay as 50 wt.-% master batch in AMSAM (30 wt.-% acrylonitrile, 70 wt.-% α-methyl styrene, viscosity number 57 ml/g) |
| Component B2: | hindered amine light stabilizer (HALS) Tinuvin^{®} 770 from BASF |
| Component B3: | hindered amine light stabilizer (HALS) Chimassorb^{®} 944 from BASF |
| Component C1: | Bis(2-propylheptyl)phthalate (DPHP) is a plastisizer. |
| Component C2: | Polyethylene wax Licocene^{®} PE 4201 available from Clariant. |
| Component D1: | Carbon black Black Pearls^{®} 880 from Cabot as 30 wt.-% master batch in SAN with 24% acrylonitrile and viscosity number 64 ml/g |

### Preparation of Basic Rubber Latex L1:

The reaction vessel was charged with 90.2 parts by weight of demineralized water, 0.61 parts by weight of the sodium salt of a C12- to C18- paraffin sulfonic acid and 0.23 parts by weight sodium bicarbonate. When the temperature in the reaction vessel reached 59°C, 0.16 parts by weight of sodium persulfate, dissolved in 5 parts by weight of demineralized water, were added. A mixture of 59.51 parts by weight butyl acrylate and 1.21 parts by weight tricyclodecenyl acrylate were added within a period of 210 min. Afterwards the reaction was continued for 60 min. Finally, the polymer dispersion had a total solid content of 39.6 % and the latex particles had a particle diameter of 75 nm (determined by turbidity).

### Preparation of Graft Rubber Latex (Component A-1a):

An amount of 151.9 parts by weight of the basic latex were added to the reaction vessel together with 92.2 parts by weight of demineralized water and 0.14 parts by weight of sodium persulfate, dissolved in 3.22 parts by weight of demineralized water. Within a period of 190 min a mixture of 31.18 parts by weight of styrene and 9.31 parts by weight of acrylonitrile were added at a temperature of 61°C, followed by a post polymerization time of 60 min at 65°C. A polymer dispersion with a total solid content of 35.5 % was obtained. The latex particles had a diameter 87 nm (determined by turbidity). After synthesis, the latex was coagulated with magnesium sulfate solution at a temperature of approximately 60°C, followed by a sintering step at approximately 90°C. The resulting slurry was centrifuged yielding a wet rubber powder which was further processed.

### Preparation of Basic Rubber Latex L2:

The reaction vessel was charged with 70.66 parts by weight of demineralized water, 0.3 parts by weight of latex L1 and 0.23 parts by weight of sodium bicarbonate. After heating the reaction vessel to 60°C, 0.16 parts by weight of sodium persulfate, dissolved in 5 parts by weight demineralized water, were added to the reaction mixture. A mixture of 59.51 parts by weight butyl acrylate and 1.21 parts by weight tricyclodecenyl acrylate were added within a period of 210 min. In parallel to the first feed a solution of 0.36 parts by weight of the sodium salt of a C12- to C18-paraffin sulfonic acid in 16.6 parts by weight demineralized water were also added over a period of 210 min. After 200 min, from starting the feed, the temperature is ramped to 65°C.

Afterwards the reaction was continued for 60 min at 65°C. Finally, the polymer dispersion had a total solid content of 39.4 % and the latex particles have a particle diameter of 440 nm (determined by turbidity).

### Preparation of Graft Rubber Latex (Component A-1b):

An amount of 154 parts by weight of the basic latex were added to the reaction vessel together with 88.29 parts by weight of demineralized water, 0.11 parts by weight of the sodium salt of a C12- to C18-paraffin sulfonic acid and 0.14 parts by weight of sodium persulfate, dissolved in 5.61 parts by weight of demineralized water. The reaction mixture was heated to 61°C. Within a period of 60 min 13.16 parts by weight are added at a temperature of 61°C, followed by a post polymerization time of 90 min, where the temperature was increased from 61 to 65°C.

Then a mixture of 20.5 parts by weight of styrene and 6.83 parts by weight of acrylonitrile were added to the reaction over a period of 150 min. The reaction was continued at 65 °C for another 60 min. A polymer dispersion with a total solid content of 35.2 % was obtained. The latex particles had a diameter 500 nm (determined by turbidity). After synthesis the latex was coagulated with magnesium sulfate solution at a temperature of approximately 88 °C, followed by a sintering step at approximately 130 °C. The resulting slurry was centrifuged yielding a wet rubber powder which was further processed

### Preparation of molding composition (P) and sample plaques

Examples and Comparative Examples of molding compositions were prepared by compounding all constituents using a twin screw extruder (model ZSK26MC, Coperion GmbH, length: 1035 mm) at Tm=240°C according to the specific ratios given in Table 1.

Sample plaques (approximately 7,5 x 5 cm) and other samples have been prepared via injection molding (Tm: 260°C).

**Table 1. Compounding Recipes**

| in wt.-% | Comp Ex. 1 | Comp Ex. 2 | Comp Ex. 3 | Comp Ex. 4 | Comp Ex. 5 | Ex. 1 | Ex. 2 |
|---|---|---|---|---|---|---|---|
| A-1a: (90 nm, BA-g-SAN) | 19.8 | 19.8 | 19.6 | 19.5 | 19.5 | 19.5 | 19.5 |
| A-1b: (500 nm, BA-g-SAN) | 13.1 | 13.0 | 12.9 | 12.9 | 12.9 | 12.9 | 12.9 |
| A-2a: AMSAN (30 wt.-% ACN, 70 wt.-% α-methyl styrene, VN 57 ml/g) | 29.2 | 29.1 | 28.9 | 28.8 | 28.8 | 28.8 | 28.7 |
| A-2b: SAN (35 % ACN, VN 80 ml/g) | 33.9 | 33.9 | 33.6 | 33.5 | 33.5 | 33.5 | 33.4 |
| B1: Cyasorb UV-3853 as 50 % MB in AMSAM (30 wt.-% ACN, 70 wt.-% α-methyl styrene, VN 57 ml/g) (Cyasorb content) | - | - | 0.59 (0.29) | 0.59 (0.29) | 0.98 (0.49) | 0.59 (0.29) | 0.58 (0.29) |
| B2: Tinuvin 770 | - | 0.20 | 0.49 | 0.49 | 0.29 | 0.29 | 0.29 |
| B3: Chimassorb 944 | - | - | - | 0.29 | - | 0.59 | 0.78 |
| C1: Plasticiser DPHP | 0.05 | 0.05 | 0.05 | 0.05 | 0.05 | 0.05 | 0.05 |
| C2: Polyethylene Wax | 0.34 | 0.34 | - | - | - | - | - |
| D1: Carbon black (as 30 wt.-% MB in SAN 24% ACN, VN 64 ml/g) (carbon black content) | 3.96 (1.19) | 3.95 (1.19) | 3.92 (1.18) | 3.90 (1.17) | 3.91 (1.17) | 3.90 (1.17) | 3.89 (1.17) |

Examples and molding compounds with prefix "comp-" are non-inventive and serve for comparison.

Herein, each BA-g-SAN (i.e., components A-1a and A-1b) comprises approximately 60 parts n-butyl acrylate (BA) containing a cross-linking agent, approximately 40 parts SAN (mass ratio styrene : acrylonitrile 1:3 to 1:4), and approximately 1 part of a further monomer such as, e.g., dihydrodicyclopentadienyl acrylate (DCPA) or tricyclodecenyl acrylate.

### Weathering Conditions

The properties of the sample plaques were tested with respect to weathering conditions according to the following proceedings. Simulation of moist warm climate was made according to ISO 4892-2A with the following parameter:
black standard 65±2°C (dry phase: 35-45°C), relative humidity: 70±10%;
irradiation: 0.51 W/m² at 340 nm (alternatively 60 W/m² at wavelength of 300-400 nm);

The test results were evaluated by color measurements according to DIN 6174 as well as gloss measurements according to DIN EN ISO 2813 at a measuring angle of 60°. All references to gloss levels and gloss measurements in this invention are understood to be measured according to these conditions.

Gloss retention in this invention is defined as the ratio in % between the measured gloss after weathering and the gloss before being subjected to artificial weathering.

The results of evaluation are given in Table 2.

To determine the extent of formation of deposit during the production of the moldings, the above-mentioned molding compositions and comparative molding compositions in the form of pellets were metered under identical conditions into an injection molding machine, melted, and injection-molded in a mold for producing tensile specimens with a weld line and having no vents. Injection of the tensile specimen in this mold took place from the two ends, the result being that the two melt fronts met in the center of the mold and produced a weld line.

After every 500 shots, i.e. produced injection-molded test specimens, the mold was dismantled and the mold deposits occurring in the vicinity of the weld line were assessed visually and graded by a panel of persons skilled in the art on a scale from 1 (very good, no mold deposits) to 6 (unsatisfactory, high level of mold deposits).

Usually a grade of 3 or better is required by producers of high gloss molded parts with high weathering stability.

The results of the evaluation are given in Table 2.

**Table 2: Mold deposit formation and weathering results**

| in wt.-% | Comp Ex. 1 | Comp Ex. 2 | Comp Ex. 3 | Comp Ex. 4 | Comp Ex. 5 | Ex. 1 | Ex. 2 |
|---|---|---|---|---|---|---|---|
| B1: | - | - | 0.59 (0.29) | 0.59 (0.29) | 0.98 (0.49) | 0.59 (0.29) | 0.58 (0.29) |
| Cyasorb UV-3853 as 50 % MB in AMSAM (30 wt.-% ACN, 70 wt.-% α-methyl styrene, VN 57 ml/g) (Cyasorb content) | | | | | | | |
| B2: | - | 0.20 | 0.49 | 0.49 | 0.29 | 0.29 | 0.29 |
| Tinuvin 770 | | | | | | | |
| B3: | - | - | - | 0.29 | - | 0.59 | 0.78 |
| Chimassorb 944 | | | | | | | |

| Results for high gloss plaques | | | | | | | |
|---|---|---|---|---|---|---|---|
| Grade for mold deposit formation | 2 | 2-3 | 4 | 4 | 2-3 | 2-3 | 2-3 |
| Gloss at 60° before being subjected to artificial weathering | 93.7 | 94.2 | 94.2 | 95.0 | 94.6 | 95.4 | 95.2 |

| Color Shift dE after weathering according to ISO 4892-2A | | | | | | | |
|---|---|---|---|---|---|---|---|
| 1600 h | 17.1 | 2.3 | 1.8 | 2.2 | 2.0 | 4.5 | 4.7 |
| 2400 h | 18.0 | 14.5 | 3.2 | 1.6 | 6.7 | 5.3 | 4.9 |
| 3200 h | 16.8 | 18.7 | 17.3 | 15.1 | 19.2 | 5.2 | 5.0 |

| Gloss 60° retention in % after weathering according to ISO 4892-2A | | | | | | | |
|---|---|---|---|---|---|---|---|
| 1600 h | 5.7 | 87.9 | 91.3 | 90.3 | 89.3 | 82.3 | 79.7 |
| 2400 h | 3.0 | 26.0 | 83.0 | 90.8 | 77.0 | 82.7 | 82.8 |
| 3200 h | 1.6 | 5.7 | 28.8 | 42.8 | 15.3 | 78.6 | 79.5 |

| Results for low gloss plaques | | | | | | | |
|---|---|---|---|---|---|---|---|
| Gloss 60° before being subjected to artificial weathering | 2.6 | 2.7 | - | - | - | - | - |

| Color Shift dE after weathering according to ISO 4892-2A | | | | | | | |
|---|---|---|---|---|---|---|---|
| 1600 h | 0.9 | 3.2 | - | - | - | - | - |
| 2400 h | 3.7 | 0.9 | - | - | - | - | - |
| 3200 h | 2.2 | 3.2 | - | - | - | - | - |

The weathering results shown in Table 2 for grained plaques with low gloss surface texture for formulations from prior art (Comp Ex. 1, Comp Ex. 2) show satisfying weathering stability with color shifts dE below dE = 6 after 3200 h of ISO 4892-2A weathering. This shows that there is no technical need to improve weathering performance of prior art formulations when parts are produced with grained surface texture.

The weathering results shown in Table 2 for high gloss plaques for the comparative molding compositions (Comp. Ex. 1, Comp. Ex. 2, Comp. Ex. 3, Comp. Ex. 4, Comp. Ex. 5) however do not show satisfying weathering stability after 3200 h with color shifts dE above dE = 15 and gloss retention below 50 %. This clearly demonstrates the technical need for further improvement of weathering stability of high gloss surface parts.

The weathering results shown in Table 2 for high gloss plaques after 2400 h for Comp. Ex. 3, Comp. Ex. 4 and Comp. Ex. 5 show satisfying weathering results with dE smaller than 5 and gloss retention bigger than 75% which shows significant improvement compared to Comp. Ex. 1 and Comp. Ex. 2. But still, as outlined above, after 3200 h which is a usual requirement by automotive producers these comparative example formulations do not meet the technical requirements.

The weathering results shown in Table 2 for high gloss plaques after 3200 h for the inventive Examples 1 and 2 surprisingly show a significant improvement of weathering results compared to all comparative examples from prior art. For Ex. 1 and Ex. 2 after 3200 h color shift dE is at below dE = 6 and gloss retention is above 75 %.

The results of mold deposit formation in combination with the above described weathering results in Table 2 clearly show that the comparative molding compositions do not meet the required combination for high gloss surface parts of acceptable mold deposit formation with grades of 3 or better and the desired UV performance after 3200 h with a color shift at dE = 6 or lower and gloss retention above 75%. However, Examples 1 and 2 meet these requirements as can be seen in Table 2.

With the high gloss weathering stability after 3200 h and the low mold deposit formation of the examples of the inventive molding compositions, the technical demand outlined in this invention for high gloss surfaces can be answered which was not possible with prior art formulations.

## Claims

1. A molding composition (P) comprising:
(A) 81.7 to 99.4 wt.-%, based on the total weight of the molding composition (P), of at least one thermoplastic polymer composition (A) comprising:
(A-1) at least one graft copolymer (A-1), wherein the graft copolymer (A-1) is a rubber-modified copolymer comprising repeating units of acrylonitrile and styrene, and
(A-2) at least one thermoplastic matrix (A-2) based on one or more vinylaromatic copolymers;
(B) at least one hindered amine light stabilizing composition (B) comprising:
(B-1) 0.1 to 0.9 wt.-%, preferably 0.15 to 0.6 wt.-%, more preferably 0.2 to 0.4 wt.-%, based on the total weight of the molding composition (P), of a hindered amine light stabilizer mixture having a monopiperidine structure with at least one alkyl group at each of the 2 and 6 positions of the monopiperidine structure and saturated or unsaturated C12-C21 ester moieties at at least one of the 3, 4 or 5 positions of the monopiperidine structures,
(B-2) 0 to 0.4 wt.-%, preferably 0.1 to 0.4 wt.-%, more preferably 0.1 to 0.35 wt.-%, based on the total weight of the molding composition (P), of at least one hindered amine light stabilizer having a dipiperidine structure with at least one alkyl group at each of the 2 and 6 positions of the dipiperidine structure and not containing any saturated or unsaturated C12-C21 ester moieties at one of the 3, 4 or 5 positions of the piperidine structures, wherein the at least one hindered amine light stabilizer having a dipiperidine structure has a molecular weight of 200-550 g/mol, and
(B-3) 0.5 to 2 wt.-%, preferably 0.51 to 1.8 wt.-%, more preferably 0.55 to 1.5 wt.-%, based on the total weight of the molding composition (P), of at least one hindered amine light stabilizer having a polymeric structure comprising piperidine groups with at least one alkyl group at each of the 2 and 6 positions of the piperidine groups and not containing any saturated or unsaturated C12-C21 ester moieties at one of the 3, 4 or 5 positions of the piperidine groups, wherein the at least one hindered amine light stabilizer having a polymeric structure has a molecular weight of 1000-4000 g/mol, preferably of 1500-4000 g/mol, more preferably 2000-4000 g/mol;
(C) 0 to 10 wt.-%, preferably 0.1 to 10 wt.-%, based on the total weight of the molding composition (P), of one or more colorants, dyes and/or pigments (C); and
(D) 0 to 5 wt.-%, preferably 0.05 to 5 wt.-%, based on the total weight of the molding composition (P), of one or more further additives (D);
wherein the constituents (A) to (D) sum up to 100 wt.-% of the molding composition (P).

2. The molding composition (P) according to claim 1, wherein the hindered amine light stabilizing composition (B) comprises:
(B-1) 0.1 to 0.9 wt.-%, preferably 0.15 to 0.6 wt.-%, more preferably 0.2 to 0.4 wt.- %, based on the total weight of the molding composition (P), of a compound represented by the chemical formula (I): 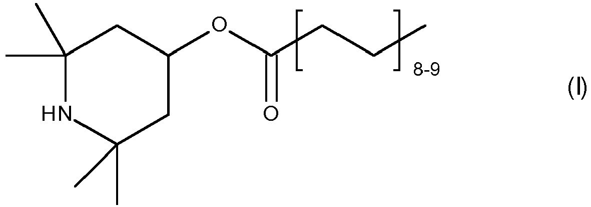
(B-2) 0 to 0.4 wt.-%, preferably 0.1 to 0.4 wt.-%, more preferably 0.1 to 0.35 wt.-%, based on the total weight of the molding composition (P), of a compound represented by the chemical formula (II): 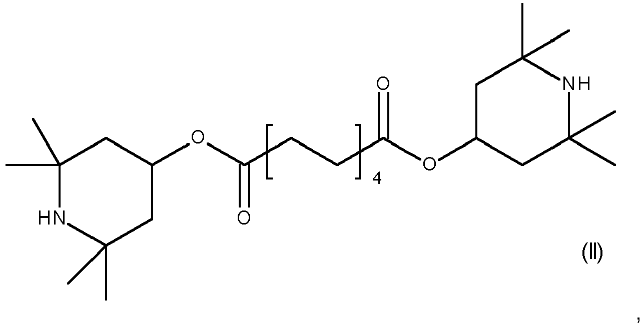 and
(B-3) 0.5 to 2 wt.-%, preferably 0.51 to 1.8 wt.-%, more preferably 0.55 to 1.5 wt.-%, based on the total weight of the molding composition (P), of a compound represented by the chemical formula (III):

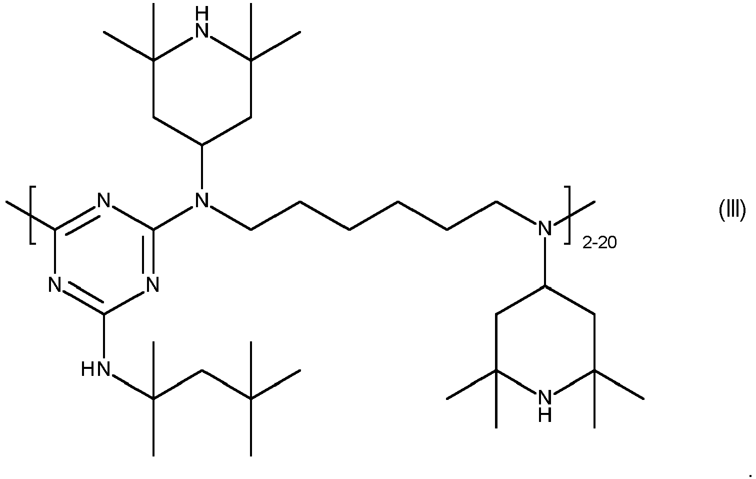

3. The molding composition (P) according to claim 1 or 2, wherein the at least one graft copolymer (A-1) comprises or consists of an acrylonitrile styrene acrylate (ASA) copolymer comprising rubber particles having an average particle size d₅₀ of the rubber particles in the acrylonitrile styrene acrylate (ASA) copolymer from 50 to 1000 nm, wherein the average particle size is determined by scattered light measurement.

4. The molding composition (P) according to any of claims 1 to 3, wherein the at least one thermoplastic matrix (A-2) comprises a copolymer which contains at least one vinyl cyanide repeating unit and at least one vinylaromatic repeating unit.

5. The molding composition (P) according to any of claims 1 to 4, wherein the at least one thermoplastic polymer composition (A) comprises at least one copolymer (A-2) comprising:
18 to 45 wt.-% of at least one vinyl cyanide repeating unit; and
55 to 82 wt.-% of at least one vinylaromatic repeating unit.

6. The molding composition (P) according to any of claims 1 to 5, wherein at the least one thermoplastic polymer composition (A) comprises:
(A-1) 5 to 50 wt.-%, based on the thermoplastic polymer composition (A), of at least one graft copolymer (A-1) comprising or consisting of an acrylonitrile styrene acrylate (ASA) copolymer comprising rubber particles having an average particle size d₅₀ of the rubber particles in the acrylonitrile styrene acrylate (ASA) copolymer from 50 to 1000 nm, wherein the average particle size is determined by scattered light measurement;
(A-2) 20 to 95 wt.-%, based on the thermoplastic polymer composition (A), of at least one thermoplastic matrix (A-2) comprising 18 to 45 wt.-%, based on the total weight of the thermoplastic matrix (A-2), of at least one vinyl cyanide repeating unit and 55 to 82 wt.-%, based on the total weight of the thermoplastic matrix (A-2), of at least one vinylaromatic repeating unit; and
(A-3) 0 to 75 wt.-%, based on the thermoplastic polymer composition (A), of one or more additional thermoplastic polymers (A-3).

7. The molding composition (P) according to any of claims 1 to 6, wherein the graft copolymer (A-1) comprises a binary or trinary size distribution of the rubber partides comprising:
(A-1a) at least one graft copolymer (A-1a) having an average particle size d₅₀ of the rubber particles in the ASA copolymer from 50 to 150 nm; and
(A-1b) at least one graft copolymer (A-1b) having an average particle size d₅₀ of the rubber particles in the ASA copolymer from 200 to 750 nm.

8. The molding composition (P) according to any of the claims 1 to 7, wherein a high gloss surface area on a molded article (T) produced from said molding composition (P) that exhibits a gloss level above 75 gloss units before any weathering exposure keeps a gloss level of above 75% of the gloss level before weathering after being subjected to artificial weathering according to ISO 4892-2A for 3200h, wherein the gloss level is determined according to DIN EN ISO 2813 at a measuring angle of 60°.

9. The molding composition (P) according to any of the claims 1 to 8, wherein a high gloss surface area on a molded article (T) produced from said molding composition (P) that exhibits a gloss level above 75 gloss units before any weathering exposure exhibits a color shift dE as measured in reference to the unexposed surface of below dE = 6, after being subjected to artificial weathering according to ISO 4892-2A for 3200 h, wherein the gloss level is determined according to DIN EN ISO 2813 at a measuring angle of 60°.

10. Method for producing the molding composition (P) according to any of claims 1 to 9, the method comprising at least the following steps:
(i) providing the components (A) to (D) in the predetermined amounts to an optionally heatable mixing device; and
(ii) blending the components (A) to (D) in the optionally heatable mixing device at temperatures above the glass transition point of the components (A) to (D) to obtain the molding composition (P).

11. Method for improving weathering resistance of high gloss surface molded articles (T) with gloss levels above 75 gloss units on at least a part of the surface area of the molded article (T) before being subjected to artificial weathering of a molding composition (P), wherein the gloss level is determined according to DIN EN ISO 2813 at a measuring angle of 60°,
wherein said method comprises the step of compounding the constituents (A) to (D) according to any of claims 1 to 9, and wherein a high gloss surface molded article (T) obtained from the molding composition (P) exhibits the following:
a color shift of a high gloss surface molded article (T) produced from the molding composition (P) subjected to artificial weathering according to ISO 4892-2A for 3200 h of below 25 % of the color shift of a high gloss surface molded article (T) produced from a comparative molding composition (P') molded and assessed with same conditions,
wherein the comparative molding composition (P') is obtained by compounding the components (A) to (D) contained in the molding composition (P) according to any of claims 1 to 9 but containing less than 0.5 wt.-% of the at least one hindered amine light stabilizer (B-3), based on the total weight of the comparative molding composition (P').

12. Method for reducing mold deposit formation upon the molding of high gloss surface molded articles (T) with gloss levels above 75 gloss units on at least a part of the surface area of the molded article (T), wherein the gloss level is determined according to DIN EN ISO 2813 at a measuring angle of 60°,
wherein said method comprises the step of compounding the constituents (A) to (D) according to any of claims 1 to 9 and wherein the reduction of mold deposit formation is observed as followed:
reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P") molded and assessed with same conditions,
where the comparative molding composition (P") is obtained by compounding the components (A) to (D) contained in the molding composition (P) according to any of claims 1 to 9, with the difference that more than 0.4 wt.-% of the at least one hindered amine light stabilizer (B-2), based on the total weight of the comparative molding composition (P"), are used in the comparative molding composition (P").

13. Method for improving weathering resistance on high gloss surface molded articles (T) with gloss levels above 75 gloss units on at least a part of the surface area of the molded article (T) before being subjected to artificial weathering of a molding composition (P), wherein the gloss level is determined according to DIN EN ISO 2813 at a measuring angle of 60°, and also for reducing mold deposit formation upon the molding of such high gloss surface molded articles (T),
wherein said method comprises the step of compounding the constituents (A) to (D) according to any of claims 1 to 9, and wherein a high gloss surface molded article (T) obtained from the molding composition (P) exhibits the following:
a color shift of a high gloss surface molded article (T) produced from the molding composition (P) subjected to artificial weathering according to ISO 4892-2A for 3200 h of below 25 % of the color shift of a high gloss surface molded article (T) produced from a comparative molding composition (P‴) molded and assessed with same conditions,
and also a reduction of the extent of formation of mold deposit during production of molded high gloss parts as assessed by visual inspection of the deposit formation on the mold in the vicinity of a weld line after production of 500 injection molded test specimens produced from the molding composition (P) in comparison to the extent of mold deposit formation from a comparative molding composition (P‴) molded and assessed with same conditions,
wherein the comparative molding composition (P‴) is obtained by compounding the components (A) to (D) contained in the molding composition (P) according to any of claims 1 to 9 but containing less than 0.5 wt.-% of at least one hindered amine light stabilizer (B-3) and more than at least 0.4 wt.-% of at least one hindered amine light stabilizer (B-2), each based on the total weight of the comparative molding composition (P‴).

14. Molded article (T) comprising high gloss surface areas with gloss levels above 75 gloss units prepared from a molding composition (P) according to any of claims 1 to 9, wherein the gloss level is determined according to DIN EN ISO 2813 at a measuring angle of 60°.

15. Use of a molded article (T) with preferably high gloss surface areas with gloss levels above 75 gloss units prepared from a molding composition (P) according to any of the claims 1 to 9 in unpainted exterior applications, preferably automotive applications, wherein the gloss level is determined according to DIN EN ISO 2813 at a measuring angle of 60°.

## Patentansprüche

1. Formmasse (P), umfassend:
(A) 81,7 bis 99,4 Gew.-%, bezogen auf das Gesamtgewicht der Formmasse (P), mindestens einer thermoplastischen Polymerzusammensetzung (A), umfassend:
(A-1) mindestens ein Pfropfcopolymer (A-1), wobei es sich bei dem Pfropfcopolymer (A-1) um ein kautschukmodifiziertes Copolymer, das Wiederholungseinheiten von Acrylnitril und Styrol umfasst, handelt, und
(A-2) mindestens eine thermoplastische Matrix (A-2) auf Basis von einem oder mehreren vinylaromatischen Copolymeren;
(B) mindestens eine Lichtschutzzusammensetzung (B) vom Typ gehindertes Amin, umfassend:
(B-1) 0,1 bis 0,9 Gew.-%, vorzugsweise 0,15 bis 0,6 Gew.-%, weiter bevorzugt 0,2 bis 0,4 Gew.-%, bezogen auf das Gesamtgewicht der Formmasse (P), einer Mischung von Lichtschutzmitteln vom Typ gehindertes Amin mit einer Monopiperidinstruktur mit mindestens einer Alkylgruppe an jeder der 2- und 6-Positionen der Monopiperidinstruktur und gesättigten oder ungesättigten C12-C21-Estergruppierungen an mindestens einer der 3-, 4- oder 5-Positionen der Monopiperidinstrukturen,
(B-2) 0 bis 0,4 Gew.-%, vorzugsweise 0,1 bis 0,4 Gew.-%, weiter bevorzugt 0,1 bis 0,35 Gew.-%, bezogen auf das Gesamtgewicht der Formmasse (P), mindestens eines Lichtschutzmittels vom Typ gehindertes Amin mit einer Dipiperidinstruktur mit mindestens einer Alkylgruppe an jeder der 2- und 6-Positionen der Dipiperidinstruktur und ohne gesättigte oder ungesättigte C12-C21-Estergruppierungen an einer der 3-, 4- oder 5-Positionen der Piperidinstrukturen, wobei das mindestens eine Lichtschutzmittel vom Typ gehindertes Amin mit einer Dipiperidinstruktur ein Molekulargewicht von 200-550 g/mol aufweist, und
(B-3) 0,5 bis 2 Gew.-%, vorzugsweise 0,51 bis 1,8 Gew.-%, weiter bevorzugt 0,55 bis 1,5 Gew.-%, bezogen auf das Gesamtgewicht der Formmasse (P), mindestens eines Lichtschutzmittels vom Typ gehindertes Amin mit einer polymeren Struktur mit Piperidingruppen mit mindestens einer Alkylgruppe an jeder der 2- und 6-Positionen der Piperidingruppen und ohne gesättigte oder ungesättigte C12-C21-Estergruppierungen an einer der 3-, 4- oder 5-Positionen der Piperidingruppen, wobei das mindestens eine Lichtschutzmittel vom Typ gehindertes Amin mit einer polymeren Struktur ein Molekulargewicht von 1000-4000 g/mol, vorzugsweise 1500-4000 g/mol, weiter bevorzugt 2000-4000 g/mol, aufweist;
(C) 0 bis 10 Gew.-%, vorzugsweise 0,1 bis 10 Gew.-%, bezogen auf das Gesamtgewicht der Formmasse (P), eines oder mehrerer Farbmittel, Farbstoffe und/oder Pigmente (C); und
(D) 0 bis 5 Gew.-%, vorzugsweise 0,05 bis 5 Gew.-%, bezogen auf das Gesamtgewicht der Formmasse (P), eines oder mehrerer weiterer Additive (D);
wobei sich die Bestandteile (A) bis (D) zu 100 Gew.-% der Formmasse (P) summieren.

2. Formmasse (P) nach Anspruch 1, wobei die Lichtschutzzusammensetzung (B) vom Typ gehindertes Amin Folgendes umfasst:
(B-1) 0,1 bis 0,9 Gew.-%, vorzugsweise 0,15 bis 0,6 Gew.-%, weiter bevorzugt 0,2 bis 0,4 Gew.-%, bezogen auf das Gesamtgewicht der Formmasse (P), einer Verbindung, die durch die chemische Formel (I) wiedergegeben wird: 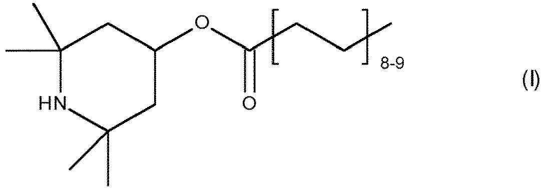
(B-2) 0 bis 0,4 Gew.-%, vorzugsweise 0,1 bis 0,4 Gew.-%, weiter bevorzugt 0,1 bis 0,35 Gew.-%, bezogen auf das Gesamtgewicht der Formmasse (P), einer Verbindung, die durch die chemische Formel (II) wiedergegeben wird: 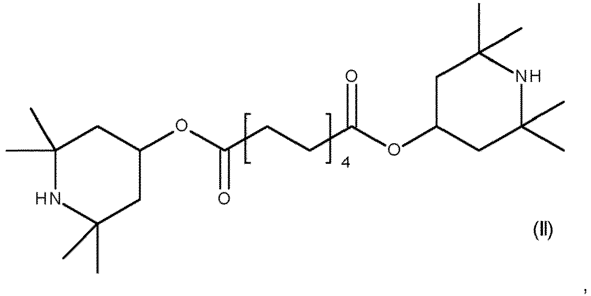 und
(B-3) 0,5 bis 2 Gew.-%, vorzugsweise 0,51 bis 1,8 Gew.-%, weiter bevorzugt 0,55 bis 1,5 Gew.-%, bezogen auf das Gesamtgewicht der Formmasse (P), einer Verbindung, die durch die chemische Formel (III) wiedergegeben wird:

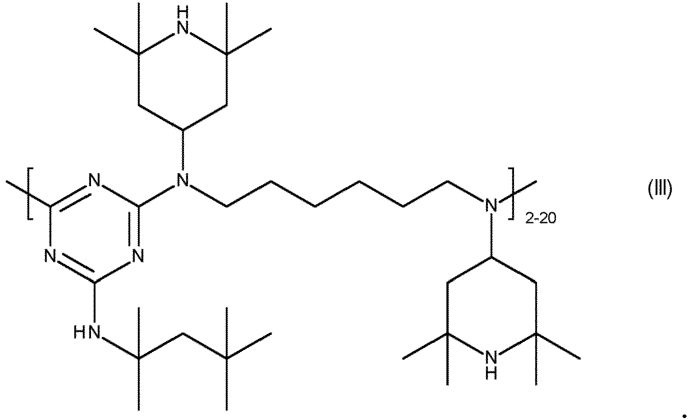

3. Formmasse (P) nach Anspruch 1 oder 2, wobei das mindestens eine Pfropfcopolymer (A-1) ein Acrylnitril-Styrol-Acrylat(ASA)-Copolymer, das Kautschukteilchen mit einer durchschnittlichen Teilchengröße d₅₀ der Kautschukteilchen in dem Acrylnitril-Styrol-Acrylat(ASA)-Copolymer von 50 bis 1000 nm umfasst, umfasst oder daraus besteht, wobei die durchschnittliche Teilchengröße durch Streulichtmessung bestimmt wird.

4. Formmasse (P) nach einem der Ansprüche 1 bis 3, wobei die mindestens eine thermoplastische Matrix (A-2) ein Copolymer umfasst, welches mindestens eine Vinylcyanid-Wiederholungseinheit und mindestens eine Vinylaromat-Wiederholungseinheit enthält.

5. Formmasse (P) nach einem der Ansprüche 1 bis 4, wobei die mindestens eine thermoplastische Polymerzusammensetzung (A) mindestens ein Copolymer (A-2) umfasst, welches
18 bis 45 Gew.-% mindestens einer Vinylcyanid-Wiederholungseinheit und
55 bis 82 Gew.-% mindestens einer Vinylaromat-Wiederholungseinheit
umfasst.

6. Formmasse (P) nach einem der Ansprüche 1 bis 5, wobei die mindestens eine thermoplastische Polymerzusammensetzung (A) Folgendes umfasst:
(A-1) 5 bis 50 Gew.-%, bezogen auf die thermoplastische Polymerzusammensetzung (A), mindestens eines Pfropfcopolymers (A-1), das ein Acrylnitril-Styrol-Acrylat(ASA)-Copolymer, das Kautschukteilchen mit einer durchschnittlichen Teilchengröße d₅₀ der Kautschukteilchen in dem Acrylnitril-Styrol-Acrylat(ASA)-Copolymer von 50 bis 1000 nm umfasst, umfasst oder daraus besteht, wobei die durchschnittliche Teilchengröße durch Streulichtmessung bestimmt wird;
(A-2) 20 bis 95 Gew.-%, bezogen auf die thermoplastische Polymerzusammensetzung (A), mindestens einer thermoplastischen Matrix (A-2), die 18 bis 45 Gew.-%, bezogen auf das Gesamtgewicht der thermoplastischen Matrix (A-2), mindestens einer Vinylcyanid-Wiederholungseinheit und 55 bis 82 Gew.-%, bezogen auf das Gesamtgewicht der thermoplastischen Matrix (A-2), mindestens einer Vinylaromat-Wiederholungseinheit umfasst; und
(A-3) 0 bis 75 Gew.-%, bezogen auf die thermoplastische Polymerzusammensetzung (A) eines oder mehrerer zusätzlicher thermoplastischer Polymere (A-3).

7. Formmasse (P) nach einem der Ansprüche 1 bis 6, wobei das Pfropfcopolymer (A-1) eine binäre oder trinäre Größenverteilung der Kautschukteilchen aufweist, die Folgendes umfasst:
(A-1a) mindestens ein Pfropfcopolymer (A-1a) mit einer durchschnittlichen Teilchengröße d₅₀ der Kautschukteilchen in dem ASA-Copolymer von 50 bis 150 nm und
(A-1b) mindestens ein Pfropfcopolymer (A-1b) mit einer durchschnittlichen Teilchengröße d₅₀ der Kautschukteilchen in dem ASA-Copolymer von 200 bis 750 nm.

8. Formmasse (P) nach einem der Ansprüche 1 bis 7, wobei ein Hochglanzoberflächenbereich auf einem aus der Formmasse (P) hergestellten Formteil (T) mit einem Glanzniveau von mehr als 75 Glanzeinheiten vor jeglicher Bewitterung nach 3200 h künstlicher Bewitterung gemäß ISO 4892-2A ein Glanzniveau von mehr als 75 % des Glanzniveaus vor der Bewitterung behält, wobei das Glanzniveau gemäß DIN EN ISO 2813 bei einem Messwinkel von 60° bestimmt wird.

9. Formmasse (P) nach einem der Ansprüche 1 bis 8, wobei ein Hochglanzoberflächenbereich auf einem aus der Formmasse (P) hergestellten Formteil (T) mit einem Glanzniveau von mehr als 75 Glanzeinheiten vor jeglicher Bewitterung nach 3200 h künstlicher Bewitterung gemäß ISO 4892-2A eine in Bezug auf die unbewitterte Oberfläche gemessene Farbverschiebung dE von weniger als dE = 6 aufweist, wobei das Glanzniveau gemäß DIN EN ISO 2813 bei einem Messwinkel von 60° bestimmt wird.

10. Verfahren zur Herstellung der Formmasse (P) nach einem der Ansprüche 1 bis 9, wobei das Verfahren mindestens die folgenden Schritte umfasst:
(i) Eintragen der Komponenten (A) bis (D) in den vorbestimmten Mengen in eine gegebenenfalls beheizbare Mischvorrichtung und
(ii) Mischen der Komponenten (A) bis (D) in der gegebenenfalls beheizbaren Mischvorrichtung bei Temperaturen oberhalb des Glasübergangspunkts der Komponenten (A) bis (D) zum Erhalt der Formmasse (P).

11. Verfahren zur Verbesserung der Witterungsbeständigkeit von eine Hochglanzoberfläche aufweisenden Formteilen (T) mit Glanzniveaus von mehr als 75 Glanzeinheiten auf mindestens einem Teil des Oberflächenbereichs des Formteils (T) vor künstlicher Bewitterung einer Formmasse (P), wobei das Glanzniveau gemäß DIN EN ISO 2813 bei einem Messwinkel von 60° bestimmt wird,
wobei das Verfahren den Schritt des Compoundierens der Bestandteile (A) bis (D) nach einem der Ansprüche 1 bis 9 umfasst und wobei ein aus der Formmasse (P) erhaltenes, eine Hochglanzoberfläche aufweisendes Formteil (T) Folgendes aufweist:
eine Farbverschiebung eines aus der Formmasse (P) hergestellten, eine Hochglanzoberfläche aufweisenden Formteils (T), das 3200 h künstlicher Bewitterung gemäß ISO 4892-2A unterzogen wurde, von weniger als 25 % der Farbverschiebung eines aus einer Vergleichsformmasse (P') hergestellten, unter den gleichen Bedingungen geformten und beurteilten,
eine Hochglanzoberfläche aufweisenden Formteils (T),
wobei die Vergleichsformmasse (P') durch Compoundieren der in der Formmasse (P) nach einem der Ansprüche 1 bis 9, die aber weniger als 0,5 Gew.-% des mindestens einen Lichtschutzmittels vom Typ gehindertes Amin (B-3), bezogen auf das Gesamtgewicht der Vergleichsformmasse (P'), enthält, enthaltenen Komponenten (A) bis (D), erhalten wird.

12. Verfahren zur Verringerung der Bildung von Formbelägen beim Formen von eine Hochglanzoberfläche aufweisenden Formteilen (T) mit Glanzniveaus von mehr als 75 Glanzeinheiten auf mindestens einem Teil des Oberflächenbereichs des Formteils (T), wobei das Glanzniveau gemäß DIN EN ISO 2813 bei einem Messwinkel von 60° bestimmt wird,
wobei das Verfahren den Schritt des Compoundierens der Bestandteile (A) bis (D) nach einem der Ansprüche 1 bis 9 umfasst und wobei die Verringerung der Bildung von Formbelägen wie folgt beobachtet wird:
Verringerung des Ausmaßes der Bildung von Formbelägen während der Herstellung von Hochglanz-Formteilen gemäß visueller Inspektion der Belagsbildung auf der Form in der Nähe einer Bindenaht nach Herstellung von 500 spritzgegossenen Prüfkörpern aus der Formmasse (P) im Vergleich zum Ausmaß der Bildung von Formbelägen einer unter den gleichen Bedingungen geformten und beurteilten Vergleichsformmasse (P"),
wobei die Vergleichsformmasse (P") durch Compoundieren der in der Formmasse (P) nach einem der Ansprüche 1 bis 9 enthaltenen Komponenten (A) bis (D) erhalten wird, mit dem Unterschied, dass in der Vergleichsformmasse (P") mehr als 0,4 Gew.-% des mindestens einen Lichtschutzmittels vom Typ gehindertes Amin (B-2), bezogen auf das Gesamtgewicht der Vergleichsformmasse (P"), verwendet werden.

13. Verfahren zur Verbesserung der Witterungsbeständigkeit von eine Hochglanzoberfläche aufweisenden Formteilen (T) mit Glanzniveaus von mehr als 75 Glanzeinheiten auf mindestens einem Teil des Oberflächenbereichs des Formteils (T) vor künstlicher Bewitterung einer Formmasse (P), wobei das Glanzniveau gemäß DIN EN ISO 2813 bei einem Messwinkel von 60° bestimmt wird, sowie zur Verringerung der Bildung von Formbelägen beim Formen von derartigen eine Hochglanzoberfläche aufweisenden Formteilen (T),
wobei das Verfahren den Schritt des Compoundierens der Bestandteile (A) bis (D) nach einem der Ansprüche 1 bis 9 umfasst und wobei ein aus der Formmasse (P) erhaltenes, eine Hochglanzoberfläche aufweisendes Formteil (T) Folgendes zeigt:
eine Farbverschiebung eines aus der Formmasse (P) hergestellten, eine Hochglanzoberfläche aufweisenden Formteils (T), das 3200 h künstlicher Bewitterung gemäß ISO 4892-2A unterzogen wurde, von weniger als 25 % der Farbverschiebung eines aus einer Vergleichsformmasse (P‴) hergestellten, unter den gleichen Bedingungen geformten und beurteilten, eine Hochglanzoberfläche aufweisenden Formteils (T)
sowie eine Verringerung des Ausmaßes der Bildung von Formbelägen während der Herstellung von Hochglanz-Formteilen gemäß visueller Inspektion der Belagsbildung auf der Form in der Nähe einer Bindenaht nach Herstellung von 500 spritzgegossenen Prüfkörpern aus der Formmasse (P) im Vergleich zum Ausmaß der Bildung von Formbelägen einer unter den gleichen Bedingungen geformten und beurteilten Vergleichsformmasse (P‴),
wobei die Vergleichsformmasse (P‴) durch Compoundieren der in der Formmasse (P) nach einem der Ansprüche 1 bis 9, die aber weniger als 0,5 Gew.-% des mindestens einen Lichtschutzmittels vom Typ gehindertes Amin (B-3) und mehr als mindestens 0,4 Gew.-% des mindestens einen Lichtschutzmittels vom Typ gehindertes Amin (B-2), jeweils bezogen auf das Gesamtgewicht der Vergleichsformmasse (P‴), enthält, enthaltenen Komponenten (A) bis (D), erhalten wird.

14. Formteil (T) mit Hochglanzoberflächenbereichen mit Glanzniveaus von mehr als 75 Glanzeinheiten, hergestellt aus einer Formmasse (P) nach einem der Ansprüche 1 bis 9, wobei das Glanzniveau gemäß DIN EN ISO 2813 bei einem Messwinkel von 60° bestimmt wird.

15. Verwendung eines eines aus einer Formmasse (P) nach einem der Ansprüche 1 bis 9 hergestellten Formteils (T) mit vorzugsweise Hochglanzoberflächenbereichen mit Glanzniveaus von mehr als 75 Glanzeinheiten bei unlackierten Außenanwendungen, vorzugsweise Automobilanwendungen, wobei das Glanzniveau gemäß DIN EN ISO 2813 bei einem Messwinkel von 60° bestimmt wird.

## Revendications

1. Composition de moulage (P) comprenant :
(A) 81,7 à 99,4 % en poids, sur la base du poids total de la composition de moulage (P), d'au moins une composition de polymère thermoplastique (A) comprenant :
(A-1) au moins un copolymère greffé (A-1), le copolymère greffé (A-1) étant un copolymère modifié au caoutchouc comprenant des motifs répétitifs d'acrylonitrile et de styrène, et
(A-2) au moins une matrice thermoplastique (A-2) à base d'un ou de plusieurs copolymères vinylaromatiques ;
(B) au moins une composition de stabilisation de la lumière à base d'amine encombrée (B) comprenant : (B-1) 0,1 à 0,9 % en poids, de préférence 0,15 à 0,6 % en poids, plus préférentiellement 0,2 à 0,4 % en poids, sur la base du poids total de la composition de moulage (P), d'un mélange de stabilisateur de lumière à base d'amine encombrée ayant une structure monopipéridine avec au moins un groupe alkyle à chacune des positions 2 et 6 de la structure monopipéridine et des groupements ester C12-C21 saturés ou insaturés à au moins une des positions 3, 4 ou 5 des structures monopipéridine,
(B-2) 0 à 0,4 % en poids, de préférence 0,1 à 0,4 % en poids, plus préférentiellement 0,1 à 0,35 % en poids, sur la base du poids total de la composition de moulage (P), d'au moins un stabilisateur de lumière à base d'amine encombrée ayant une structure dipipéridine avec au moins un groupe alkyle à chacune des positions 2 et 6 de la structure dipipéridine et ne contenant aucun groupement ester C12-C21 saturé ou insaturé à l'une des positions 3, 4 ou 5 des structures pipéridine, l'au moins un stabilisateur de lumière à base d'amine encombrée qui a une structure dipipéridine ayant un poids moléculaire de 200-550 g/mol, et
(B-3) 0,5 à 2 % en poids, de préférence 0,51 à 1,8 % en poids, plus préférentiellement 0,55 à 1,5 % en poids, sur la base du poids total de la composition de moulage (P), d'au moins un stabilisateur de lumière à base d'amine encombrée ayant une structure polymérique comprenant des groupes pipéridine avec au moins un groupe alkyle à chacune des positions 2 et 6 des groupes pipéridine et ne contenant aucun groupement ester C12-C21 saturé ou insaturé à l'une des positions 3, 4 ou 5 des groupes pipéridine, l'au moins un stabilisateur de lumière à base d'amine encombrée qui a une structure polymérique ayant un poids moléculaire de 1000-4000 g/mol, de préférence de 1500-4000 g/mol, plus préférentiellement de 2000-4000 g/mol ;
(C) 0 à 10 % en poids, de préférence 0,1 à 10 % en poids, sur la base du poids total de la composition de moulage (P), d'un ou plusieurs colorants, teintures et/ou pigments (C), et
(D) 0 à 5 % en poids, de préférence 0,05 à 5 % en poids, sur la base du poids total de la composition de moulage (P), d'un ou plusieurs additifs supplémentaires (D) ;
les constituants (A) à (D) représentant jusqu'à 100 % en poids de la composition de moulage (P).

2. Composition de moulage (P) selon la revendication 1, la composition de stabilisation de la lumière à base d'amine encombrée (B) comprenant :
(B-1) 0,1 à 0,9 % en poids, de préférence 0,15 à 0,6 % en poids, plus préférentiellement 0,2 à 0,4 % en poids, sur la base du poids total de la composition de moulage (P), d'un composé représenté par la formule chimique (1) : 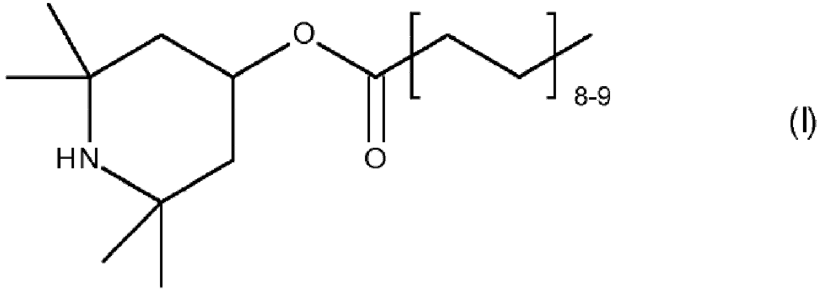
(B-2) 0 à 0,4 % en poids, de préférence 0,1 à 0,4 % en poids, plus préférentiellement 0,1 à 0,35 % en poids, sur la base du poids total de la composition de moulage (P), d'un composé représenté par la formule chimique (II) : 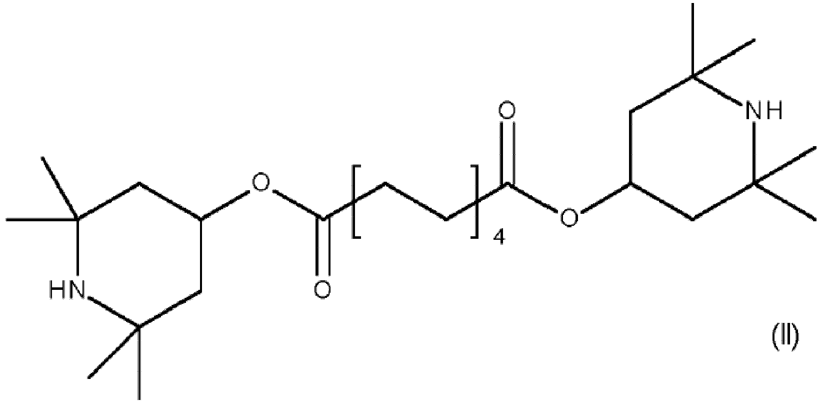 et
(B-3) 0,5 à 2 % en poids, de préférence 0,51 à 1,8 % en poids, plus préférentiellement 0,55 à 1,5 % en poids, sur la base du poids total de la composition de moulage (P), d'un composé représenté par la formule chimique (III) :

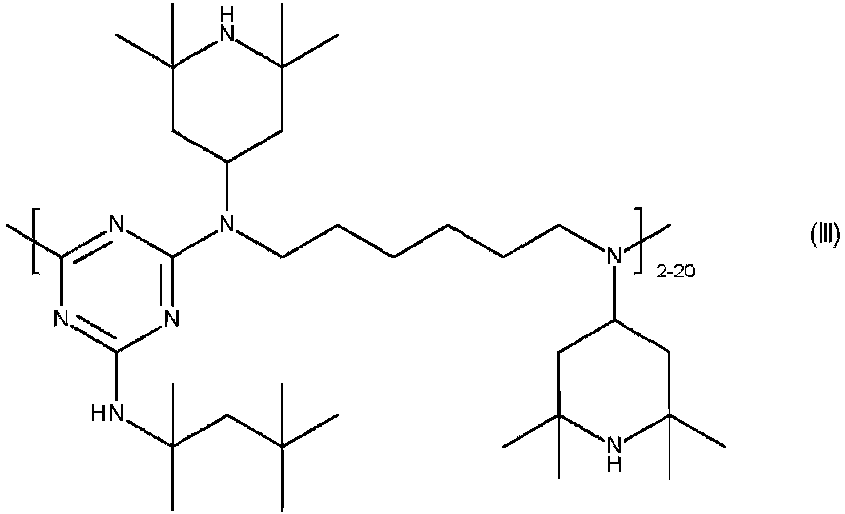

3. Composition de moulage (P) selon la revendication 1 ou 2, l'au moins un copolymère greffé (A-1) comprenant ou consistant en un copolymère acrylonitrile styrène acrylate (ASA) comprenant des particules de caoutchouc ayant une taille moyenne de particule d₅₀ des particules de caoutchouc dans le copolymère acrylonitrile styrène acrylate (ASA) de 50 à 1000 nm, la taille moyenne des particules étant déterminée par une mesure de la lumière diffusée.

4. Composition de moulage (P) selon l'une quelconque des revendications 1 à 3, l'au moins une matrice thermoplastique (A-2) comprenant un copolymère qui contient au moins un motif répétitif de cyanure de vinyle et au moins un motif répétitif vinylaromatique.

5. Composition de moulage (P) selon l'une quelconque des revendications 1 à 4, l'au moins une composition de polymère thermoplastique (A) comprenant au moins un copolymère (A-2) comprenant :
18 à 45 % en poids d'au moins un motif répétitif de cyanure de vinyle ; et
55 à 82 % en poids d'au moins un motif répétitif vinylaromatique.

6. Composition de moulage (P) selon l'une quelconque des revendications 1 à 5, au moins une composition de polymère thermoplastique (A) comprenant :
(A-1) 5 à 50 % en poids, sur la base de la composition de polymère thermoplastique (A), d'au moins un copolymère greffé (A-1) comprenant ou consistant en un copolymère acrylonitrile styrène acrylate (ASA) comprenant des particules de caoutchouc ayant une taille moyenne de particule d₅₀ des particules de caoutchouc dans le copolymère acrylonitrile styrène acrylate (ASA) de 50 à 1000 nm, la taille moyenne des particules étant déterminée par une mesure de la lumière diffusée ;
(A-2) 20 à 95 % en poids, sur la base de la composition polymère thermoplastique (A), d'au moins une matrice thermoplastique (A-2) comprenant 18 à 45 % en poids, sur la base du poids total de la matrice thermoplastique (A-2), d'au moins un motif répétitif de cyanure de vinyle et 55 à 82 % en poids, sur la base du poids total de la matrice thermoplastique (A-2), d'au moins un motif répétitif vinylaromatique ; et
(A-3) 0 à 75 % en poids, sur la base de la composition de polymère thermoplastique (A), d'un ou de plusieurs polymères thermoplastiques supplémentaires (A-3) .

7. Composition de moulage (P) selon l'une quelconque des revendications 1 à 6, le copolymère greffé (A-1) comprenant une distribution de taille binaire ou trinaire des particules de caoutchouc comprenant :
(A-la) au moins un copolymère greffé (A-la) ayant une taille moyenne de particule d₅₀ des particules de caoutchouc dans le copolymère ASA de 50 à 150 nm ; et
(A-1b) au moins un copolymère greffé (A-1b) ayant une taille moyenne de particule d₅₀ des particules de caoutchouc dans le copolymère ASA de 200 à 750 nm.

8. Composition de moulage (P) selon l'une quelconque des revendications 1 à 7, une surface à brillance élevée sur un article moulé (T) produit à partir de ladite composition de moulage (P) qui présente un niveau de brillance supérieur à 75 unités de brillance avant toute exposition aux intempéries conservant un niveau de brillance supérieur à 75 % du niveau de brillance avant l'exposition aux intempéries après avoir été soumis à des intempéries artificielles conformément à la norme ISO 4892-2A pendant 3200 h, le niveau de brillance étant déterminé conformément à la norme DIN EN ISO 2813 à un angle de mesure de 60°.

9. Composition de moulage (P) selon l'une quelconque des revendications 1 à 8, une surface à brillance élevée d'un article moulé (T) produit à partir de ladite composition de moulage (P) qui présente un niveau de brillance supérieur à 75 unités de brillance avant toute exposition aux intempéries présentant un décalage de couleur dE mesuré par rapport à la surface non exposée de moins de dE = 6, après avoir été soumise à des intempéries artificielles conformément à la norme ISO 4892-2A pendant 3200 h, le niveau de brillance étant déterminé conformément à la norme DIN EN ISO 2813 à un angle de mesure de 60°.

10. Procédé de production de la composition de moulage (P) selon l'une quelconque des revendications 1 à 9, le procédé comprenant au moins les étapes suivantes :
(i) la fourniture des composants (A) à (D) dans les quantités prédéterminées à un dispositif de mélange éventuellement chauffé ; et
(ii) le mélange des composants (A) à (D) dans le dispositif de mélange éventuellement chauffé à des températures supérieures au point de transition vitreuse des composants (A) à (D) pour obtenir la composition de moulage (P).

11. Procédé d'amélioration de la résistance aux intempéries des articles moulés à surface à brillance élevée (T) avec des niveaux de brillance supérieurs à 75 unités de brillance sur au moins une partie de la surface de l'article moulé (T) avant d'être soumis à des intempéries artificielles d'une composition de moulage (P), le niveau de brillance étant déterminé conformément à la norme DIN EN ISO 2813 à un angle de mesure de 60°,
ledit procédé comprenant l'étape de mélange des constituants (A) à (D) selon l'une quelconque des revendications 1 à 9, et un article moulé à surface à brillance élevée (T) obtenu à partir de la composition de moulage (P) présentant les caractéristiques suivantes : un changement de couleur d'un article moulé de surface à brillance élevée (T) produit à partir de la composition de moulage (P) soumise à des intempéries artificielles selon la norme ISO 4892-2A pendant 3200 h inférieur à 25 % du changement de couleur d'un article moulé de surface à brillance élevée (T) produit à partir d'une composition de moulage comparative (P') moulée et évaluée dans les mêmes conditions,
la composition de moulage comparative (P') étant obtenue en mélangeant les composants (A) à (D) contenus dans la composition de moulage (P) selon l'une quelconque des revendications 1 à 9, mais contenant moins de 0,5 % en poids de l'au moins un stabilisateur de lumière à base d'amine encombrée (B-3), sur la base du poids total de la composition de moulage comparative (P').

12. Procédé de réduction de la formation de dépôt de moule lors du moulage d'articles moulés à surface à brillance élevée (T) avec des niveaux de brillance supérieurs à 75 unités de brillance sur au moins une partie de la surface de l'article moulé (T), le niveau de brillance étant déterminé conformément à la norme DIN EN ISO 2813 à un angle de mesure de 60°,
ledit procédé comprenant l'étape de mélange des constituants (A) à (D) selon l'une quelconque des revendications 1 à 9 et la réduction de la formation de dépôt de moule étant observée comme suit :
réduction de l'étendue de la formation de dépôt de moule pendant la production de pièces moulées à brillance élevée, évaluée par inspection visuelle de la formation de dépôts sur le moule à proximité d'une ligne de soudure après la production de 500 échantillons d'essai moulés par injection produits à partir de la composition de moulage (P) par rapport à l'étendue de la formation de dépôt de moule à partir d'une composition de moulage comparative (P") moulée et évaluée dans les mêmes conditions,
la composition de moulage comparative (P") étant obtenue en mélangeant les composants (A) à (D) contenus dans la composition de moulage (P) selon l'une quelconque des revendications 1 à 9, à la différence que plus de 0,4 % en poids de l'au moins un stabilisateur de lumière à base d'amine encombrée (B-2), sur la base du poids total de la composition de moulage comparative (P"), sont utilisés dans la composition de moulage comparative (P").

13. Procédé pour améliorer la résistance aux intempéries sur des articles moulés à surface à brillance élevée (T) avec des niveaux de brillance supérieurs à 75 unités de brillance sur au moins une partie de la surface de l'article moulé (T) avant d'être soumis à des intempéries artificielles d'une composition de moulage (P), le niveau de brillance étant déterminé conformément à la norme DIN EN ISO 2813 à un angle de mesure de 60°, et également pour réduire la formation de dépôt de moule lors du moulage de tels articles moulés à surface à brillance élevée (T),
ledit procédé comprenant l'étape de mélange des constituants (A) à (D) selon l'une quelconque des revendications 1 à 9, et un article moulé à surface à brillance élevée (T) obtenu à partir de la composition de moulage (P) présentant les caractéristiques suivantes :
un changement de couleur d'un article moulé à surface à brillance élevée (T) produit à partir de la composition de moulage (P) soumise à des intempéries artificielles selon la norme ISO 4892-2A pendant 3200 h inférieur à 25 % du changement de couleur d'un article moulé à surface à brillance élevée (T) produit à partir d'une composition de moulage comparative (P‴) moulée et évaluée dans les mêmes conditions,
ainsi qu'une réduction de l'étendue de la formation de dépôt de moule pendant la production de pièces moulées à brillance élevée, évaluée par inspection visuelle de la formation du dépôt sur le moule à proximité d'une ligne de soudure après la production de 500 échantillons d'essai moulés par injection produits à partir de la composition de moulage (P) par rapport à l'étendue de la formation de dépôt de moule à partir d'une composition de moulage comparative (P‴) moulée et évaluée dans les mêmes conditions,
la composition de moulage comparative (P‴) étant obtenue en mélangeant les composants (A) à (D) contenus dans la composition de moulage (P) selon l'une quelconque des revendications 1 à 9, mais contenant moins de 0,5 % en poids d'au moins un stabilisateur de lumière à base d'amine encombrée (B-3) et plus d'au moins 0,4 % en poids d'au moins un stabilisateur de lumière à base d'amine encombrée (B-2), chacun sur la base du poids total de la composition de moulage comparative (P‴).

14. Article moulé (T) comprenant des surfaces à brillance élevée avec des niveaux de brillance supérieurs à 75 unités de brillance, préparé à partir d'une composition de moulage (P) selon l'une quelconque des revendications 1 à 9, le niveau de brillance étant déterminé selon la norme DIN EN ISO 2813 à un angle de mesure de 60°.

15. Utilisation d'un article moulé (T) avec de préférence des surfaces à brillance élevée avec des niveaux de brillance supérieurs à 75 unités de brillance, préparé à partir d'une composition de moulage (P) selon l'une quelconque des revendications 1 à 9, dans des applications extérieures non peintes, de préférence des applications automobiles, le niveau de brillance étant déterminé selon la norme DIN EN ISO 2813 à un angle de mesure de 60°.
